(19) Europäisches Patentamt
European Patent Office
Office européen des brevets

(11) **EP 4 580 080 A1**

(12) **EUROPEAN PATENT APPLICATION**
published in accordance with Art. 153(4) EPC

(43) Date of publication:
**02.07.2025 Bulletin 2025/27**

(21) Application number: **23862515.6**

(22) Date of filing: **08.09.2023**

(51) International Patent Classification (IPC):
**H04B 7/06** (2006.01)

(52) Cooperative Patent Classification (CPC):
**H04B 7/06; H04W 24/10**

(86) International application number:
**PCT/CN2023/117738**

(87) International publication number:
**WO 2024/051821 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.09.2022 CN 202211104120**

(71) Applicant: **Huawei Technologies Co., Ltd.
Shenzhen, Guangdong 518129 (CN)**

(72) Inventors:
• **MAO, Zhi**
  **Shenzhen, Guangdong 518129 (CN)**
• **LIU, Chenchen**
  **Shenzhen, Guangdong 518129 (CN)**
• **GAN, Ming**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CHANNEL STATE INFORMATION PROCESSING METHOD AND APPARATUS**

(57) A channel state information processing method and apparatus are applied to a wireless local area network system supporting 802.11 series protocols, for example, an IEEE 802.11ax next-generation Wi-Fi protocol, such as 802.11be, Wi-Fi 7, or EHT, or a next generation of 802.11be, such as Wi-Fi 8 or UHR, and may be further applied to a UWB-based wireless personal area network system, a sensing (sensing) system, or the like. The method includes: a transmit end determines a CSI report based on a transformation matrix, and sends the CSI report; and correspondingly, a receive end receives the CSI report, and processes, based on the transformation matrix, first CSI included in the CSI report, where the first CSI included in the CSI report is obtained based on second CSI and the transformation matrix, the transformation matrix is a complex matrix with M rows and N columns, and modulus values of elements in the transformation matrix are 1.

FIG. 4

**Description**

This application claims priority to Chinese Patent Application No. 202211104120.7, filed with the China National Intellectual Property Administration on September 9, 2022 and entitled "CHANNEL STATE INFORMATION PROCESSING METHOD AND APPARATUS", which is incorporated herein by reference in its entirety.

**TECHNICAL FIELD**

This application relates to the field of communication technologies, and in particular, to a channel state information (channel state information, CSI) processing method and apparatus.

**BACKGROUND**

In recent years, wireless traffic has been increasing rapidly, and users have increasingly high requirements for communication service quality, such as low latency and ultra-reliability. As a key technology for carrying wireless traffic services, a wireless local area network (wireless local area network, WLAN) is continuously developing and evolving to meet higher requirements of users for wireless transmission. Currently, technologies such as massive multiple input multiple output (multiple input multiple output, MIMO) and a millimeter wave are expected to become hot technologies for driving WLAN development. However, an increase in an antenna quantity and an increase in a frequency bandwidth both lead to an increase in a quantity of subcarriers that require channel detection. Consequently, channel state information (channel state information, CSI) feedback overheads are increased, and transmission performance is degraded.

An orthogonal frequency division multiplexing (orthogonal frequency division multiple, OFDM) technology is one of core WLAN technologies. A basic principle of the OFDM technology is to convert a serial high-rate transmission bit stream into a plurality of parallel low-rate transmission bit streams and modulate the data to different orthogonal subcarriers. In the 802.11ac protocol, a bandwidth of 20 megahertz (MHz) includes 64 subcarriers. However, in the 802.11ax protocol, a quantity of 20 MHz subcarriers is increased to 256, resulting in a fourfold increase in CSI feedback overheads. In a transmission process, a channel coefficient of each subcarrier needs to be estimated, and an increase in the quantity of subcarriers means an increase in CSI feedback overheads. MIMO is another core WLAN technology. MIMO means that, given a same bandwidth and a same quantity of subcarriers, a plurality of transmit antennas and a plurality of receive antennas can be used at a transmit end and a receive end respectively, so that signals are transmitted and received through the plurality of antennas at the transmit end and the plurality of antennas at the receive end, thereby improving communication quality. In MIMO, estimation and feedback are required for a channel between each transmit antenna and each receive antenna, and an increase in the antenna quantity also means an increase in CSI feedback overheads. Both OFDM and MIMO lead to an increase in CSI feedback overheads, and a combination of OFDM and MIMO in a WLAN leads to an exponential increase in CSI overheads.

Therefore, how to perform CSI compression processing to reduce CSI feedback overheads needs to be urgently resolved.

**SUMMARY**

Embodiments of this application provide a CSI processing method and apparatus, which can not only effectively reduce CSI feedback overheads, but also effectively improve accuracy of CSI compression.

According to a first aspect, an embodiment of this application provides a CSI processing method. The method includes:

determining a CSI report, where the CSI report includes first CSI, the first CSI is obtained based on second CSI and a transformation matrix, the transformation matrix is a complex matrix with M rows and N columns, modulus values of elements in the transformation matrix are 1, M is greater than N, M is a quantity of elements in the second CSI, and N is a quantity of elements in the first CSI; and sending the CSI report.

In this embodiment of this application, a transmit end compresses the second CSI by using the transformation matrix, to obtain the first CSI, where a quantity of rows in the transformation matrix corresponds to the quantity of elements in the second CSI (which may also be understood as uncompressed CSI), and a quantity of columns in the transformation matrix corresponds to the quantity of elements in the first CSI (which may also be understood as compressed CSI). In the method for compressing the CSI by using the transformation matrix according to this embodiment of this application, because M is greater than N, overheads occupied by the compressed CSI are less than overheads occupied by the uncompressed CSI. Therefore, CSI feedback overheads can be effectively reduced. In addition, this embodiment of this application may be further applied to different M and N, to implement a relatively long compression length and meet massive MIMO and multi-subcarrier scenarios.

Generally, modulus values of the uncompressed CSI vary slowly, that is, the uncompressed CSI has similar (or approximate) modulus values. Therefore, by setting the modulus values of the elements in the transformation matrix to be the same and all to 1, it is possible to ensure that modulus values of elements in restored CSI are also similar (or approximate) when a receive end restores the CSI based on the compressed CSI and the transformation matrix. Therefore, accuracy of the CSI restored by the receive end is ensured, and accuracy of CSI compression is effectively improved.

In a possible implementation, angles of elements in at least one column in the transformation matrix vary periodically, and angles of elements in different columns vary with different periods.

In this embodiment of this application, angles of the uncompressed CSI vary periodically. Therefore, by ensuring that the angles of the elements in the at least one column in the transformation matrix vary periodically, periodic angle variations of the CSI restored by the receive end based on the transformation matrix and the compressed CSI can be made as similar as possible to periodic angle variations of the uncompressed CSI, thereby improving accuracy of CSI restoration at the receive end. Angles of elements in the uncompressed CSI have different frequency components, that is, periodic angle variations of the uncompressed CSI are not completely regular (which may also be understood as not precisely periodic variations). Angle variations of elements in different columns in the transformation matrix are designed with different periods, so that an angle variation rule (which may also be referred to as a phase characteristic) of the uncompressed CSI can be effectively matched. Therefore, a difference between the CSI restored by the receive end and the uncompressed CSI is minimized, and it is ensured as much as possible that the receive end can restore the uncompressed CSI based on the compressed CSI and the transformation matrix, thereby improving accuracy of CSI compression.

In a possible implementation, angles of elements in the transformation matrix are determined based on M, N, and an angle period of the second CSI; or angles of elements in the transformation matrix are determined based on M, N, and frequency components of a discrete Fourier transform (discrete Fourier transform, DFT) of angles of the second CSI.

In this embodiment of this application, the angles of the elements in the transformation matrix are determined based on the quantity of elements (that is, N) in the first CSI, the quantity of elements (that is, M) in the second CSI, and the angle period of the second CSI (or frequency components of a DFT of phases of the second CSI), so that the angles of the elements in the transformation matrix can be effectively combined with periodic angle variations of the second CSI. Therefore, the transformation matrix is constructed by using the angle variation rule of the uncompressed CSI, thereby effectively improving compression performance of CSI compression. Therefore, the difference between the CSI restored by the receive end and the uncompressed CSI is minimized, an error between the CSI restored by the receive end and the uncompressed CSI is reduced, and accuracy of CSI compression is improved.

In a possible implementation, an angle of an element in an $m^{th}$ row and an $n^{th}$ column in the transformation matrix meets the following formula:

$$\theta_{mn} = \frac{2\pi}{T_0} \times m \times k(n),$$

where $T_0$ is related to an angle of the second CSI, m is an integer greater than 0 and less than or equal to M, n is an integer greater than 0 and less than or equal to N, and $k(n)$ is a function of n.

$\frac{2\pi}{T_0} \times k(n)$ may be equivalent to an angular velocity. A variable $k(n)$ may be used to enable angles of elements in different columns in the transformation matrix to have different angular velocities, thereby improving accuracy of CSI compression.

In a possible implementation, $T_0$ is determined based on a frequency component of the DFT of the angles of the second CSI.

In a possible implementation, $T_0$ meets the following formula:

$$T_0 = \frac{M}{f_0},$$

where $f_0$ represents a frequency component corresponding to a maximum value of modulus values of coefficients in the frequency components of the DFT of the angles of the second CSI.

In this embodiment of this application, the angle period of the second CSI is determined by using the frequency component corresponding to the maximum value of the modulus values of the coefficients in the frequency components of the DFT of the angles of the second CSI, so that the transformation matrix can be better combined with a variation rule of the angle period of the second CSI, thereby effectively improving accuracy of CSI compression.

In a possible implementation, the function of n meets the following formula:

$$k(n) = \alpha \times \left(\frac{1}{n^{\beta}} - 1\right),$$

or

$$k(n) = \alpha \times \left(\frac{1-n}{N}\right),$$

where $\alpha$ is greater than 0, and $\beta$ is greater than 0.

In a possible implementation, the CSI report further includes at least one piece of the following information: M, N, $T_0$, and $f_0$.

According to a second aspect, an embodiment of this application provides a CSI processing method. The method includes:

receiving a CSI report, where the CSI report includes first CSI; and processing the first CSI based on a transformation matrix to obtain second CSI, where the transformation matrix is a complex matrix with M rows and N columns, modulus values of elements in the transformation matrix are 1, M is greater than N, M is a quantity of elements in the second CSI, and N is a quantity of elements in the first CSI.

In a possible implementation, the method further includes: obtaining at least one piece of the following information: M, N, $T_0$, and $f_0$, where $T_0$ is related to an angle of the second CSI, and $f_0$ is determined based on $T_0$; and the processing the first CSI based on a transformation matrix to obtain second CSI includes: determining the transformation matrix based on $T_0$ or $f_0$, and M and N; and processing the first CSI based on the transformation matrix to obtain the second CSI.

In a possible implementation, angles of elements in at least one column in the transformation matrix vary periodically, and angles of elements in different columns vary with different periods.

In a possible implementation, an angle of an element in an $m^{th}$ row and an $n^{th}$ column in the transformation matrix meets the following formula:

$$\theta_{mn} = \frac{2\pi}{T_0} \times m \times k(n),$$

where m is an integer greater than 0 and less than or equal to M, n is an integer greater than 0 and less than or equal to N, and $k(n)$ is a function of n.

In a possible implementation, $T_0$ meets the following formula:

$$T_0 = \frac{M}{f_0},$$

where $f_0$ represents a frequency component corresponding to a maximum value of modulus values of coefficients in frequency components of a DFT of angles of the second CSI.

In a possible implementation, the function of n meets the following formula:

$$k(n) = \alpha \times \left(\frac{1}{n^{\beta}} - 1\right),$$

or

$$k(n) = \alpha \times \left(\frac{1-n}{N}\right),$$

where $\alpha$ is greater than 0, and $\beta$ is greater than 0.

According to a third aspect, an embodiment of this application provides a communication apparatus, configured to perform the method according to any one of the first aspect or the possible implementations of the first aspect. The communication apparatus includes units that perform the method according to any one of the first aspect or the possible implementations of the first aspect. For example, the communication apparatus may include a processing unit and a transceiver unit.

According to a fourth aspect, an embodiment of this application provides a communication apparatus, configured to perform the method according to any one of the second aspect or the possible implementations of the second aspect. The communication apparatus includes units that perform the method according to any one of the second aspect or the possible implementations of the second aspect. For example, the communication apparatus may include a processing unit and a transceiver unit.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal.

According to a seventh aspect, an embodiment of this application provides a communication apparatus. The communication apparatus includes a logic circuit and an interface, where the logic circuit is coupled to the interface; the logic circuit is configured to determine a CSI report; and the interface is configured to output the CSI report.

It may be understood that the communication apparatus shown in the seventh aspect may be a chip or an apparatus including a chip. For a detailed description of the seventh aspect, refer to the first aspect.

According to an eighth aspect, an embodiment of this application provides a communication apparatus. The communication apparatus includes a logic circuit and an interface, where the logic circuit is coupled to the interface; the interface is configured to input a CSI report; and the logic circuit is configured to process the first CSI based on a transformation matrix to obtain second CSI.

In a possible implementation, the logic circuit is specifically configured to obtain at least one piece of the following information: M, N, $T_0$, and $f_0$, where $T_0$ is related to an angle of the second CSI, and $f_0$ is determined based on $T_0$; determine the transformation matrix based on $T_0$ or $f_0$, and M and N; and process the first CSI based on the transformation matrix to obtain the second CSI.

It may be understood that the communication apparatus shown in the eighth aspect may be a chip or an apparatus including a chip. For a detailed description of the eighth aspect, refer to the second aspect.

According to a ninth aspect, an embodiment of this application provides a computer-readable storage medium. The computer-readable storage medium is configured to store a computer program. When the computer program is run on a computer, the method according to any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method according to any one of the second aspect or the possible implementations of the second aspect is performed.

According to an eleventh aspect, an embodiment of this application provides a computer program product. The computer program product includes a computer program or computer code. When the computer program product is run on a computer, the method according to any one of the first aspect or the possible implementations of the first aspect is performed.

According to a twelfth aspect, an embodiment of this application provides a computer program product. The computer program product includes a computer program or computer code. When the computer program product is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a communication system. The communication system includes a transmit end and a receive end. The transmit end is configured to perform the method according to any one of the first aspect or the possible implementations of the first aspect. The receive end is configured to perform the method according to any one of the second aspect or the possible implementations of the second aspect.

## BRIEF DESCRIPTION OF DRAWINGS

FIG. 1 is a diagram of an architecture of a communication system according to an embodiment of this application;
FIG. 2 is a diagram of an architecture of a communication system according to an embodiment of this application;
FIG. 3 is a diagram of performance of a subcarrier grouping method according to an embodiment of this application;
FIG. 4 is a schematic flowchart of a CSI processing method according to an embodiment of this application;
FIG. 5a is a diagram of phase variations of CSI according to an embodiment of this application;
FIG. 5b is a diagram of frequency components of a DFT of phases of CSI according to an embodiment of this application;
FIG. 6 is a diagram of performance of a CSI compression method based on a regression polynomial method according to an embodiment of this application;
FIG. 7a is a diagram of performance comparison between different CSI compression methods according to an embodiment of this application;
FIG. 7b is a diagram of performance comparison between different CSI compression methods according to an embodiment of this application;
FIG. 7c is a diagram of performance comparison between different CSI compression methods according to an embodiment of this application;
FIG. 8a is a diagram of performance comparison between different CSI compression methods according to an embodiment of this application;
FIG. 8b is a diagram of performance comparison between different CSI compression methods according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

## DESCRIPTION OF EMBODIMENTS

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

In this specification, reference to "an embodiment" means that specific features, structures or characteristics described with reference to the embodiment may be incorporated in at least one embodiment of this application. The phrase shown in various positions in the specification may not necessarily refer to a same embodiment, and is not an independent or alternative embodiment exclusive from another embodiment. It may be understood explicitly and implicitly by a person skilled in the art that the embodiments described herein may be combined with other embodiments.

In this application, "at least one (item)" means one or more; "plurality" means two or more; "at least two (items)" means two, three, or more; and "and/or" is used to describe an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between associated objects. "At least one of the following" or a similar expression thereof means any combination of these items. For example, at least one of a, b, or c may represent: a, b, c, "a and b", "a and c", "b and c", or "a and b and c".

The technical solutions provided in this application may be applied to a WLAN system, for example, Wi-Fi. For example, the methods provided in this application may be applied to IEEE 802.11 series protocols, for example, the 802.11a/b/g protocol, the 802.11n protocol, the 802.11ac protocol, the 802.11ax protocol, the 802.11be protocol, or a next-generation protocol. Examples are not listed one by one herein. The technical solutions provided in this application may be further applied to a wireless personal area network (wireless personal area network, WPAN) based on a UWB technology. For example, the methods provided in this application may be applied to IEEE 802.15 series protocols, for example, the 802.15.4a protocol, the 802.15.4z protocol, the 802.15.4ab protocol, or a future generation UWB WPAN protocol. Examples are not listed one by one herein. The technical solutions provided in this application may be further applied to various other communication systems, for example, an Internet of Things (Internet of Things, IoT) system, a vehicle to everything (vehicle to everything, V2X) system, and a narrowband Internet of Things (narrowband Internet of Things, NB-IoT) system, may be applied to a device in the Internet of Vehicles, an Internet of Things node, a sensor, and the like in the Internet of Things (Internet of Things, IoT), a smart camera, a smart remote control, and a smart water/electricity meter in a smart home, a sensor in a smart city, and the like, or may be further applied to a long term evolution (long term evolution, LTE) system, a 5th generation (5th generation, 5G) communication system, a new communication system emerging in future communication development, and the like.

Although embodiments of this application mainly use a WLAN as an example for description, and especially a network applied to IEEE 802.11 series standards, for example, a system supporting Wi-Fi 7 that may also be referred to as extremely high throughput (extremely high throughput, EHT), and for another example, a system supporting Wi-Fi 8 that may also be referred to as ultra high reliability (ultra high reliability, UHR) or ultra high reliability and throughput (ultra high reliability and throughput, UHRT), a person skilled in the art easily understands that aspects in this application may be extended to other networks using various standards or protocols, for example, Bluetooth (Bluetooth), a high performance radio LAN (high performance radio LAN, HIPERLAN) (which is a wireless standard similar to the IEEE 802.11 standard, and is mainly used in Europe), a wide area network (WAN), or other networks known or developed in the future. Therefore, regardless of used coverage and a used wireless access protocol, various aspects provided in this application are applicable to any appropriate wireless network.

The methods provided in this application may be implemented by a communication apparatus in a wireless communication system. For example, the communication apparatus may be an access point (access point, AP) or a station (station, STA).

The access point is an apparatus with a wireless communication function, supports communication or sensing by using a WLAN protocol, and has a function of communicating with or sensing another device (for example, a station or another access point) in a WLAN network. Certainly, the access point may further have a function of communicating with or sensing another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus with a wireless communication function may be an entire device, or may be a chip, a processing system, or the like installed in an entire device. The device in which the chip or the processing system is installed may implement the methods and functions in embodiments of this application under control of the chip or the processing system. The AP in embodiments of this application is an apparatus that provides a service for the STA, and may support the 802.11 series protocols or later protocols, or the like. For example, the access point may be an access point for a terminal (for example, a mobile phone) to access a wired (or wireless) network, and is mainly deployed at home, inside a building, and inside a campus. A typical coverage radius is tens of meters to hundreds of meters. Certainly, the access point may alternatively be deployed outdoors. For another example, the AP may be a communication entity such as a communication server, a router, a switch, or a network bridge. The AP may include various forms of macro base stations, micro base stations, relay stations, and the like. Certainly, the AP may alternatively be a chip and a processing system in these various forms of devices, to implement the methods and the functions in embodiments of this application.

The station is an apparatus with a wireless communication function, supports communication or sensing by using the WLAN protocol, and has a capability of communicating with or sensing another station or access point in the WLAN network. In the WLAN system, the station may be referred to as a non-access point station (non-access point station, non-AP STA). For example, the STA is any user communication device that allows a user to communicate with or sense an AP to communicate with the WLAN. The apparatus with a wireless communication function may be an entire device, or may be a chip, a processing system, or the like installed in an entire device. The device in which the chip or the processing system is installed may implement the methods and functions in embodiments of this application under control of the chip or the processing system. For example, the station may be a wireless communication chip, a wireless sensor, or a wireless communication terminal; and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function.

The WLAN system can provide high-rate and low-latency transmission. With continuous evolution of WLAN application scenarios, the WLAN system is to be applied to more scenarios or industries, for example, the Internet of Things industry, the Internet of Vehicles industry, the banking industry, enterprise offices, stadiums and exhibition halls, concert halls, hotel rooms, dormitories, wards, classrooms, shopping malls and supermarkets, squares, streets, workshops, and warehouses. Certainly, a device (for example, an access point or a station) that supports WLAN communication or sensing may be a sensor node (for example, a smart water meter, a smart electricity meter, or a smart air detection node) in a smart city, a smart device in a smart home (for example, a smart camera, a projector, a display, a television, a speaker, a refrigerator, or a washing machine), a node in the Internet of Things, an entertainment terminal (for example, a wearable device such as augmented reality (augmented reality, AR) or virtual reality (virtual reality, VR)), a smart device in a smart office (for example, a printer, a projector, a loudspeaker, or a speaker), an Internet of Vehicles device in the Internet of Vehicles, an infrastructure in a daily life scenario (for example, a vending machine, a self-service navigation console in a shopping mall or supermarket, a self-checkout machine, or a self-service ordering machine), a device in a large stadium or a music venue, or the like. Illustratively, for example, the access point and the station each may be a device used in the Internet of Vehicles, an Internet of Things node or a sensor in the Internet of Things, a smart camera, a smart remote control, and a smart water or electricity meter in a smart home, or a sensor in a smart city. Specific forms of the STA and the AP are not limited in embodiments of this application, and are merely examples for description herein.

For example, a communication system to which the method provided in this application may be applied may include an access point and a station. For example, this application is applicable to a scenario of communication or sensing between APs and STAs, between APs, or between STAs in the WLAN. This is not limited in embodiments of this application. Optionally, the AP may communicate with or sense a single STA, or the AP simultaneously communicates with or senses a plurality of STAs. Specifically, communication or sensing between the AP and the plurality of STAs may be further divided into downlink transmission of simultaneously sending signals by the AP to the plurality of STAs and uplink transmission of sending signals by the plurality of STAs to the AP. WLAN communication protocols may be supported between the APs and the STAs, between the APs, or between the STAs. The communication protocols may include the IEEE 802.11 series protocols, for example, the 802.11be standard, and certainly, a standard later than 802.11be.

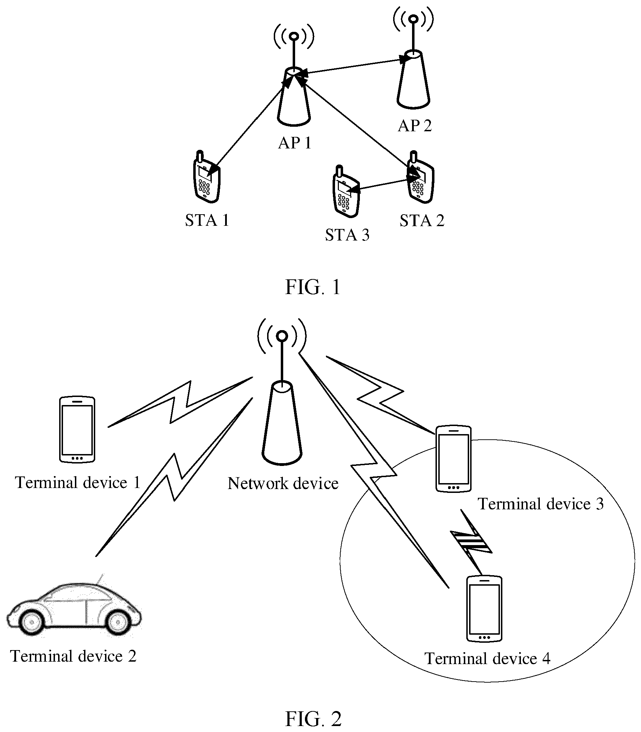

FIG. 1 is a diagram of an architecture of a communication system according to an embodiment of this application. The communication system may include one or more APs and one or more STAs. FIG. 1 shows two access points such as an AP 1 and an AP 2, and three stations such as a STA 1, a STA 2, and a STA 3. It may be understood that the one or more APs may communicate with the one or more STAs. Certainly, the APs may communicate with each other, and the STAs may communicate with each other.

It may be understood that, in FIG. 1, an example in which the STA is a mobile phone and the AP is a router is used, but this does not mean that types of the AP and the STA in this application are limited. In addition, FIG. 1 shows only two APs and three STAs as an example. There may be more or fewer APs or STAs. This is not limited in this embodiment of this application.

FIG. 2 is a diagram of an architecture of a communication system according to an embodiment of this application. As shown in FIG. 2, the communication system may include at least one network device and at least one terminal device, for example, a terminal device 1 to a terminal device 4 in FIG. 2. For example, the terminal device 3 and the terminal device 4 shown in FIG. 2 may directly communicate with each other. For example, direct communication between the terminal devices may be implemented by using a D2D technology. For example, the terminal device 1 to the terminal device 4 may separately communicate with the network device. For example, the terminal device 3 and the terminal device 4 may directly communicate with the network device, or may indirectly communicate with the network device, for example, communicate with the network device via another terminal device (not shown in FIG. 2). It should be understood that FIG. 2 shows an example of the one network device and the four terminal devices, and communication links between the communication devices. Optionally, the communication system may include a plurality of network devices, and another quantity of terminal devices, for example, more or fewer terminal devices, may be included in a coverage area of each network device. This is not limited in this embodiment of this application. The following details the terminal device and the network device.

The terminal device is an apparatus with wireless sending and receiving functions. The terminal device may communicate with an access network device (which may also be referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor, outdoor, handheld, or vehicle-mounted device; or may be deployed on the water (for example, a ship). In a possible implementation, the terminal device may be a handheld device with a wireless communication function, a vehicle-mounted device, a wearable device, a sensor, a terminal in an Internet of Things, a terminal in an Internet of Vehicles, an uncrewed aerial vehicle, a terminal device in any form in a 5G network or a future network, or the like. This is not limited in this embodiment of this application. It may be understood that the terminal device shown in this embodiment of this application may include a vehicle (for example, a car) in the Internet of Vehicles, and may also include a vehicle-mounted device, a vehicle-mounted terminal, or the like in the Internet of Vehicles. A specific form of the terminal device used in the Internet of Vehicles is not limited in this embodiment of this application. It may be understood that the terminal devices shown in this embodiment of this application may communicate with each other by using D2D, V2X, M2M, or the like. A communication method between the terminal devices is not limited in this embodiment of this application.

The network device may be an apparatus that is deployed in the radio access network and that provides a wireless communication service for the terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device with wireless sending and receiving functions, and includes but is not limited to the base station shown above (including a base station deployed on a satellite). Alternatively, the network device may be an apparatus with a base station function in 6G. Optionally, the network device may be an access node, a wireless relay node, a wireless backhaul node, or the like in a Wi-Fi system. Optionally, the network device may be a radio controller in a cloud radio access network (cloud radio access network, CRAN) scenario. Optionally, the network device may be a wearable device, a vehicle-mounted device, or the like. Optionally, the network device may be a small cell, a transmission reception point (transmission reception point, TRP) (or referred to as a transmission point), or the like. It may be understood that the network device may be alternatively a base station, a satellite, or the like in a future evolved public land mobile network (public land mobile network, PLMN). The network device may alternatively be a communication apparatus or the like functioning as a base station in a non-terrestrial communication system, D2D, V2X, or M2M. A specific type of the network device is not limited in this embodiment of this application. In systems using different radio access technologies, names of communication apparatuses with network device functions may be different, and are not listed in this embodiment of this application. Optionally, in some deployments of the network device, the network device may include a central unit (central unit, CU), a distributed unit (distributed unit, DU), and the like. In some other deployments of the network device, a CU may be further divided into a CU-control plane (control plane, CP), a CU-user plane (user plane, UP), and the like. In still some deployments of the network device, the network device may alternatively be an open radio access network (open radio access network, ORAN) architecture or the like. A specific deployment manner of the network device is not limited in this embodiment of this application.

Network architectures and service scenarios described in embodiments of this application are intended to describe the technical solutions in embodiments of this application more clearly, but do not constitute any limitation on the technical solutions provided in embodiments of this application. A person of ordinary skill in the art can know that, as the network architectures evolve and new service scenarios emerge, the technical solutions provided in embodiments of this application are also applicable to similar technical issues.

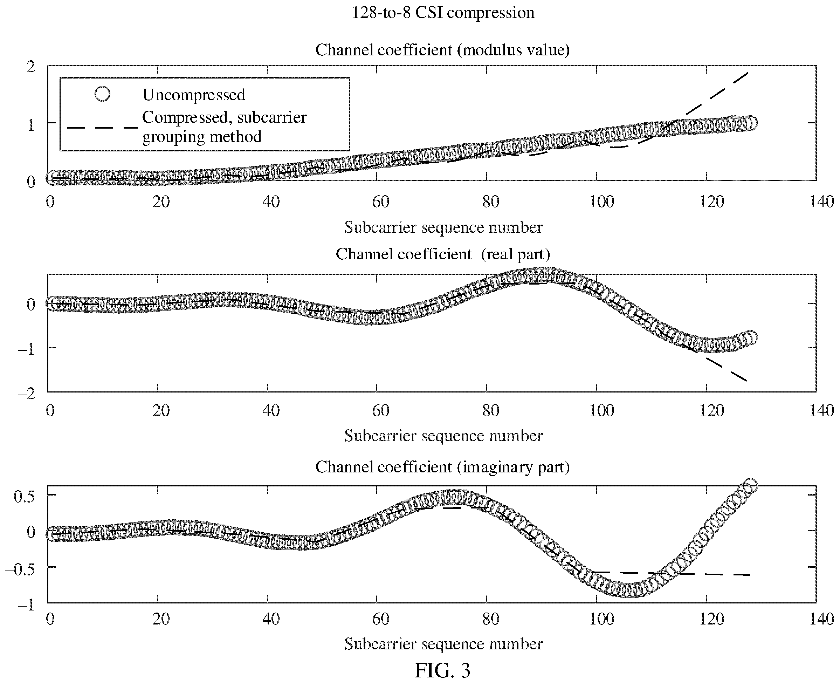

Currently, there is a subcarrier grouping method, for example, a plurality of adjacent subcarriers report one piece of CSI, to reduce feedback overheads of CSI reports. In this method, CSI of equally-spaced subcarriers is selected for transmission, and after a receive end receives a compressed CSI, the receive end performs initial CSI restoration. The method has an advantage of low calculation complexity. However, accuracy of this method is relatively low, which affects a subsequent application such as beamforming or Wi-Fi sensing, and cannot meet a CSI compression quality requirement. For CSI (which may also be referred to as channel coefficients) of a group of subcarriers received between a pair of transmit and receive antennas, performance of the subcarrier grouping method is shown in FIG. 3. In FIG. 3, "uncompressed" represents uncompressed CSI, and "compressed" represents CSI restored by the receive end based on the compressed CSI received by the receive end. It may be understood that "compressed" shown in FIG. 3 may also be referred to as "CSI restored after compression". It can be learned from FIG. 3 that, when a compression rate is relatively high (for example, 128 pieces of CSI are compressed to 8 pieces of CSI), the subcarrier grouping method has an obvious deviation. A reason why the subcarrier grouping method has an obvious deviation is as follows: As the compression rate increases, a spacing between selected subcarriers becomes larger, and continuity between the subcarriers is damaged. Consequently, accuracy of CSI restoration performed at the receive end is reduced.

However, in the subcarrier grouping method, a CSI variation rule between the subcarriers is ignored, and CSI compression is directly performed by using a one-out-of-many approach, resulting in relatively low compression quality. In an actual application, compression quality is usually ensured by dividing two to four subcarriers into one group. Therefore, a relatively long compression length cannot be implemented, and massive MIMO and multi-subcarrier scenarios cannot be met. With progress of WLAN technologies, an OFDM subcarrier spacing becomes smaller and a frequency bandwidth becomes larger. Both of the two cause an increase in a quantity of subcarriers that require channel estimation. Additionally, a quantity of MIMO antennas increases continuously. The three add up, resulting in an increase of CSI feedback overheads, consuming time originally used for data transmission, and leading to degradation of network performance.

In view of this, embodiments of this application provide a CSI processing method and apparatus to effectively reduce CSI feedback overheads. Reducing the CSI feedback overheads can effectively improve a case in which excessively high CSI feedback overheads consume the time used for data transmission, thereby ensuring network performance. Optionally, the method provided in this embodiment of this application can further effectively use a CSI variation rule between subcarriers, thereby effectively reducing a difference between CSI restored at a receive end and uncompressed CSI at a transmit end, improving compression accuracy, and improving compression performance of CSI compression. Optionally, the method provided in this embodiment of this application can further effectively meet massive MIMO and multi-subcarrier scenarios. Optionally, the CSI feedback overheads are mainly related to a quantity of MIMO antennas and a quantity of OFDM subcarriers. The method provided in this embodiment of this application can effectively alleviate a problem that the CSI feedback overheads increase due to use of at least one of a MIMO technology or an OFDM technology.

For example, CSI feedback plays an important role in the radio frequency sensing field such as Wi-Fi positioning. In a wireless environment, different human behaviors introduce different multipath changes. Therefore, by observing human movement in a wireless sensor network and the resulting CSI, it is possible to reconstruct a real physical world through radio frequency sensing, thereby providing a wide range of new services. CSI compression can reduce a transmission latency by reducing an amount of data that needs to be transmitted, and improve timeliness of CSI feedback and wireless sensing.

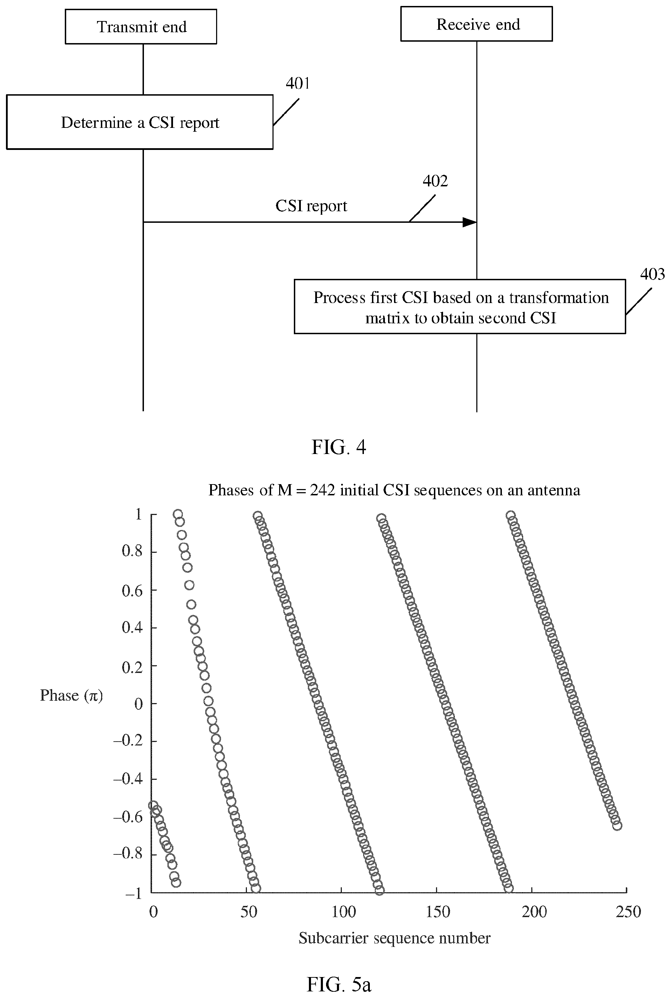

FIG. 4 is a schematic flowchart of a CSI processing method according to an embodiment of this application. The method may be applied to the communication system shown in FIG. 1 or FIG. 2. The method may be applied to a transmit end and a receive end. The transmit end may be understood as a communication apparatus sending a CSI report, and the receive end may be understood as a communication apparatus receiving the CSI report. For example, a STA may be used as a transmit end, and an AP may be used as a receive end. For another example, an AP may be used as a transmit end, and a STA may be used as a receive end. For another example, UE may be used as a transmit end, and a base station may be used as a receive end. For another example, a base station may be used as a transmit end, and UE may be used as a receive end. For another example, a beamforming receive end (beamformee) may be used as a transmit end, and a beamforming transmit end (beamformer) may be used as a receive end. It may be understood that the beamforming transmit end may be understood as a communication apparatus sending a pilot signal, and the beamforming receive end may be understood as a communication apparatus receiving the pilot signal. For example, the beamforming receive end may obtain a channel measurement result based on the pilot signal sent by the beamforming transmit end, to feed back CSI. The pilot signal may be understood as a signal used for channel detection, or a signal used for channel estimation, or a signal used for channel measurement. It may be understood that channel detection, channel estimation, and channel measurement in this embodiment of this application are mutually interchangeable. For descriptions of the transmit end and the receive end in this embodiment of this application, refer to the foregoing descriptions of FIG. 1 and FIG. 2. Details are not described herein again. Whether another forwarding apparatus is further included between the transmit end and the receive end is not limited in this embodiment of this application.

Before the method shown in FIG. 4 is described, the following first describes a transformation matrix in this embodiment of this application.

The CSI processing method provided in this embodiment of this application relates to the following optimization problem:

$$min_x \|\boldsymbol{Ax} - \boldsymbol{b}\|^2 \quad (1)$$

where a vector $\boldsymbol{b}$ represents a vector of uncompressed CSI, a vector $\boldsymbol{x}$ represents a vector of compressed CSI, and elements in the vector $\boldsymbol{b}$ and the vector $\boldsymbol{x}$ are complex numbers. A quantity of elements in the vector $\boldsymbol{b}$ is M, and a quantity of elements in the vector $\boldsymbol{x}$ is N, where both M and N are positive integers, and M > N. It may be understood that the vector $\boldsymbol{b}$ may be represented as $\boldsymbol{b} \in \mathbf{C}^{M \times 1}$, and that the vector $\boldsymbol{x}$ may be represented as $\boldsymbol{x} \in \mathbf{C}^{N \times 1}$. A matrix $\boldsymbol{A}$ represents a transformation matrix used for CSI compression, the matrix $\boldsymbol{A}$ is a complex matrix with M rows and N columns, and the matrix $\boldsymbol{A}$ may also be represented as $\boldsymbol{A} \in \mathbf{C}^{M \times N}$. In the matrix $\boldsymbol{A}$, a quantity M of rows corresponds to a quantity of pieces of uncompressed CSI (which may also be understood as the quantity of elements in the vector $\boldsymbol{b}$), and a quantity N of columns corresponds to a quantity of pieces of compressed CSI (which may also be understood as the quantity of elements in the vector $\boldsymbol{x}$). It may be understood that the compressed CSI shown herein is compressed CSI (for example, the vector $\boldsymbol{x}$) obtained by the transmit end based on the uncompressed CSI (for example, the vector $\boldsymbol{b}$), and that "compressed" in the accompanying drawings in embodiments of this application represents CSI restored by the receive end based on the vector $\boldsymbol{x}$ and the transformation matrix $\boldsymbol{A}$, that is, $\boldsymbol{Ax}$. Therefore, "compressed" in the accompanying drawings should not be understood as compressed CSI obtained by the transmit end based on the uncompressed CSI and the transformation matrix in embodiments of this application.

It may be understood that the uncompressed CSI in this embodiment of this application may be understood as CSI obtained by the transmit end through channel estimation for a group of subcarriers between a transmit antenna and a receive antenna. For example, the vector $\boldsymbol{b}$ may correspond to a vector of CSI obtained based on a transmit antenna, a receive antenna, and a group of subcarriers. A quantity of subcarriers specifically included in a group of subcarriers is not limited in this embodiment of this application. For example, a group of subcarriers may include 64 subcarriers, 242 subcarriers, or the like, which is not listed one by one. Correspondingly, M shown in this embodiment of this application may be understood as a quantity of pieces of CSI obtained on a group of subcarriers for a transmit antenna and a receive antenna.

When performing CSI compression, the transmit end may compress M pieces of CSI of a group of contiguous subcarriers to N pieces of CSI. Optionally, a quantity M of elements in each group of uncompressed CSI may be determined by a minimum value of a quantity $M_C$ of contiguous subcarriers within a bandwidth and a subcarrier quantity $M_P$ corresponding to a compression performance threshold, that is, $M = \min\{M_C, M_P\}$. $M_P$ represents a corresponding quantity of subcarriers when a minimum CSI compression performance requirement is met. $M_C$ represents a quantity of contiguous subcarriers within a bandwidth of 20 MHz, 40 MHz, 80 MHz, 160 MHz, or 320 MHz, or resource units (resource units, RUs) with different sizes. Optionally, for a bandwidth, a direct current (direct current, DC) subcarrier (which may also be referred to as a direct current subcarrier for short) (near a center frequency) within the bandwidth is generally not used to transmit data. Therefore, presence of the DC subcarrier may cause the M subcarriers shown in this embodiment of this application to be non-contiguous. However, because the DC subcarrier itself is not used to transmit data, subcarrier discontinuity caused by the DC subcarrier within the bandwidth is ignored, and ignoring the DC subcarrier is equivalent to considering that the subcarriers within the bandwidth are contiguous. Optionally, although a loss of CSI at a DC subcarrier position (near a center frequency) within a bandwidth causes a loss of phase continuity of two pieces of CSI data on two sides of the DC subcarrier position, the transmit end may perform interpolation processing at the DC position to obtain CSI of contiguous subcarriers within the bandwidth. Correspondingly, when restoring the CSI based on the compressed CSI and the transformation matrix, the receive end may restore more than M pieces of CSI, and then the receive end removes the CSI at the DC position to obtain initial CSI.

It may be understood that the transmit antenna shown in this embodiment of this application is an antenna configured to send a pilot signal (for example, an antenna configured to send a pilot signal at the receive end), and that the receive antenna is an antenna configured to receive the pilot signal (for example, an antenna configured to receive the pilot signal at the receive end).

For the transmit end, for any given vector $\boldsymbol{b}$ of uncompressed CSI, the foregoing formula (1) may be understood as a two-norm minimization problem, which belongs to a convex optimization problem. Therefore, a result of the optimization problem can be solved by using a convex optimization algorithm, and a vector $\boldsymbol{x}$ of compressed CSI is obtained.

For the receive end, the receive end may restore the uncompressed CSI based on the following formula:

$$\boldsymbol{b} \approx \boldsymbol{A}\boldsymbol{x} = \sum_{i=1}^{N} x_i \boldsymbol{A}_i \ (2)$$

where $\boldsymbol{A}_i$ represents an $i^{th}$ column vector of the matrix $\boldsymbol{A}$, and $i$ is an integer greater than or equal to 1 and less than or equal to N. In other words, the receive end may multiply each column of the matrix A by corresponding elements of the compressed CSI, and then obtain a cumulative sum, to implement estimation of the uncompressed CSI. It may be understood that an approximate sign is used in formula (2) because the CSI restored by the receive end based on the compressed CSI and the matrix $\boldsymbol{A}$ may be different from the uncompressed CSI obtained by the transmit end. For example, the difference may be caused by the optimization problem in formula (1). For example, the vector $\boldsymbol{x}$ obtained by the transmit end may not make $\|\boldsymbol{A}\boldsymbol{x} - \boldsymbol{b}\|^2$ equal to 0. For another example, the difference may be caused by an error in quantization and encoding. Examples are not listed one by one herein.

The matrix $\boldsymbol{A}$ in this embodiment of this application may meet at least one of the following conditions:
Condition 1: Modulus values of elements in the matrix $\boldsymbol{A}$ are 1. It may also be understood that all elements in each column in the matrix $\boldsymbol{A}$ are unit modulus values.

Generally, modulus values (which may also be referred to as values) of the uncompressed CSI vary slowly, that is, the uncompressed CSI has similar (or approximate) modulus values. Modulus values in the vector $\boldsymbol{b}$ are similar (or approximate). Therefore, by setting the modulus values of the elements in the vector $\boldsymbol{A}$ to be the same and all to 1, it is possible to effectively adjust the modulus values of the elements in the vector $\boldsymbol{x}$ to achieve similarity (or approximation) between modulus values of elements in the vector $\boldsymbol{A}\boldsymbol{x}$ and those in the vector $\boldsymbol{b}$. Therefore, calculation complexity in optimization of formula (1) by the transmit end can be effectively reduced, the difference between the CSI restored by the receive end and the uncompressed CSI is minimized, and compression performance of CSI compression is improved.

It may be understood that the condition 1 may also be understood as an element in an $m^{th}$ row and an $n^{th}$ column in the matrix $\boldsymbol{A}$ may meet the following formula:

$$\boldsymbol{A}_{mn} = e^{j\theta_{mn}} \ (3)$$

where $\theta_{mn}$ may be understood as an angle of the element in the $m^{th}$ row and the $n^{th}$ column in the matrix $\boldsymbol{A}$.

Condition 2: Angles (which may also be understood as phases) of elements in at least one column in the matrix **A** vary periodically, and angles of elements in different columns vary with different periods.

In an actual application, phases of the uncompressed CSI vary periodically, or it may be understood that the phases of the uncompressed CSI are periodic. FIG. 5a is a diagram of phase variations of CSI according to an embodiment of this application. In FIG. 5a, a horizontal coordinate represents a subcarrier sequence number, a vertical coordinate represents a phase, and a unit is $\pi$. FIG. 5a is a diagram of phase variations of CSI shown by using an example in which a group of subcarriers is 242 subcarriers and corresponds to one transmit antenna and one receive antenna. However, a subcarrier quantity and an antenna quantity shown in FIG. 5a should not be understood as a limitation on this embodiment of this application. It may be understood that the phase variations of the CSI shown in FIG. 5a are general. It may be understood that the angles and phases in this embodiment of this application may be understood as equivalent.

Because the angles of the uncompressed CSI vary periodically, angles of the elements in the vector **b** also vary periodically. Therefore, by ensuring that angles of elements in at least one column (for example, $A_i$) in the matrix A vary periodically, periodic angle variations of $x_iA_i$ can be made as similar as possible to periodic angle variations of the elements in the vector **b** after $A_i$ is multiplied by a coefficient $x_i$. Adjusting weights $x_i$ corresponding to different columns $A_i$ in the matrix **A** can achieve **Ax = b** as much as possible, thereby improving accuracy of CSI compression.

The angles of the elements in the vector **b** have different frequency components, that is, periodic angle variations of the vector **b** are not completely regular (which may also be understood as not precisely periodic variations). Therefore, angles of elements in different columns in the matrix **A** correspond to different periods, so that an angle variation rule (which may also be referred to as a phase characteristic) of the uncompressed CSI can be effectively matched, thereby improving accuracy of CSI compression. Therefore, the difference between the CSI restored by the receive end and the uncompressed CSI is minimized, and it is ensured as much as possible that the receive end can restore the uncompressed CSI based on the compressed CSI and the transformation matrix.

The condition 2 may be extended to each column in the matrix **A.** For example, angles of elements in each column in the matrix **A** vary periodically. Based on a relationship between a period and an angular velocity, the condition 2 may also be represented as follows: Angular velocities of angles of elements in at least one column in the matrix **A** remain unchanged (a constant angular velocity may also be understood as a same angular velocity), and angular velocities of angles of elements in different columns are different. If the condition 2 is extended to each column in the matrix **A,** angular velocities of angles of elements in each column in the matrix **A** remain unchanged, and angular velocities of angles of elements in different columns are different.

Condition 3: Angles of elements in the matrix A may be determined based on M, N, and a phase period of the uncompressed CSI.

An angle of an element in an m$^{th}$ row and an n$^{th}$ column in the matrix **A** meets the following formula:

$$\theta_{mn} = \frac{2\pi}{T_0} \times m \times k(n) \quad (4)$$

where $T_0$ represents the phase period of the uncompressed CSI, m is a positive integer less than or equal to M, $k(n)$ is a function of n, and n is a positive integer less than or equal to N.

In formula (4), $\frac{2\pi}{T_0} \times k(n)$ may be equivalent to an angular velocity. Adjusting an angular velocity of an element by using the variable $n$ may better combine formula (4) with a column in the matrix **A**, so that angles of elements in different columns in the matrix **A** have different angular velocities, thereby improving accuracy of CSI compression.

Optionally, $T_0$ may be understood as a quantity of subcarriers included in a $2\pi$ phase variation of the uncompressed CSI. Optionally, $T_0$ may be understood as a minimum period of the phase variation of the uncompressed CSI. Optionally, $T_0$ may be understood as a reference period. Optionally, $T_0$ may be understood as an optimal period of an optimization problem shown in formula (5). $T_0$ is related to an angle of the uncompressed CSI.

$$T_0 = argmin_{T_0}\|\boldsymbol{Ax} - \boldsymbol{b}\|^2 \quad (5)$$

For descriptions of parameters in formula (5), refer to formula (1). Details are not described herein again.

Based on a relationship between the phase period of the uncompressed CSI and a frequency component of a DFT of the phase, the condition 3 may also be understood as angles of elements in the matrix **A** may be determined based on M, N, and frequency components of a DFT of the phases of the uncompressed CSI.

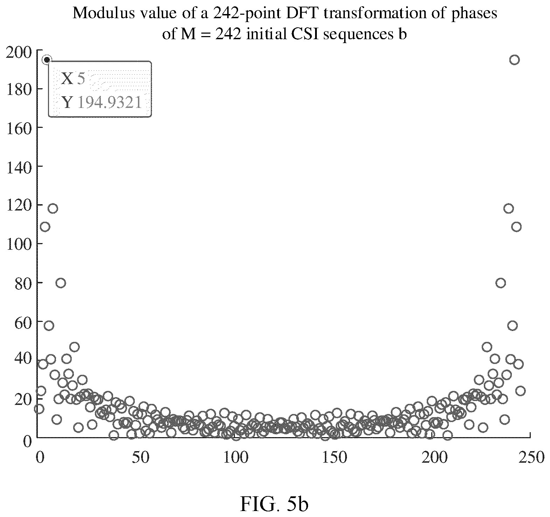

FIG. 5b is a diagram of frequency components of a DFT of phases of CSI according to an embodiment of this application. In FIG. 5b, a horizontal coordinate represents a frequency component, and a vertical coordinate represents a modulus value of a coefficient (which may also be referred to as a weight) corresponding to the frequency component.

Generally, a coefficient corresponding to a frequency component after the DFT is a complex number, and the vertical coordinate shown in FIG. 5b represents a modulus value of the coefficient. It may be understood that, based on a relationship between FIG. 5a and FIG. 5b, the horizontal coordinate in FIG. 5b may also be understood as a quantity of periods in which the phases of the uncompressed CSI (vector $b$) vary, and the quantity of periods may correspond to a quantity of oblique lines in FIG. 5a.

After the DFT of the phases of the uncompressed CSI, an x-axis of a highest point may be understood as a frequency component with a maximum modulus value of a coefficient. As shown in FIG. 5b, the x-axis of the highest point is 5. Because a frequency corresponding to a first number after the DFT of the phases of the uncompressed CSI is 1, to ensure a correspondence between a frequency and a coefficient, a frequency component of the uncompressed CSI shown in FIG. 5a is 5 - 1 = 4.

A frequency component of the DFT of a phase of the uncompressed CSI may meet the following formula:

$$f_0 = \text{index}\big(\max\big(\big|DFT(\theta^{(b)})\big|\big)\big) - 1 \quad (6)$$

where $\max(|DFT(\theta^{(b)})|)$ represents a maximum value of modulus values of coefficients corresponding to different frequency components of the DFT of the phases of the uncompressed CSI (that is, the vector $b$), or may be understood as a vertical coordinate corresponding to a highest point of the DFT of the phases of the uncompressed CSI, or may be understood as a maximum weight of the DFT of the phases of the uncompressed CSI. $\text{index}(\max(|DFT(\theta^{(b)})|))$ represents a frequency component corresponding to the foregoing maximum value, or a horizontal coordinate corresponding to the foregoing highest point, or a frequency component corresponding to the foregoing maximum weight. $\text{index}(\max(|DFT(\theta^{(b)})|))$ - 1 represents a frequency component of a phase of the uncompressed CSI.

The following describes $T_0$ in this embodiment of this application.

In a possible implementation, $T_0$ may meet the following formula:

$$T_0 = \frac{M}{f_0} \quad (7)$$

Because a quantity of elements in the uncompressed CSI is M, $T_0$ may be obtained based on M and $f_0$.

FIG. 5a and FIG. 5b are used as examples. If M = 242 and $f_0$ = 4, $T_0$ = 242/4 = 60.5. Therefore, a minimum period of a phase variation of the uncompressed CSI shown in FIG. 5a may be 60.5; or a quantity of subcarriers included in a $2\pi$ phase variation of the uncompressed CSI is 60.5; or $T_0$ that optimizes the optimization problem shown in formula (5) is 60.5.

In another possible implementation, $T_0$ may meet the following formula:

$$T_0 = \frac{M}{\text{index}(\max(|DFT(\theta^{(b)})|)) - 1} \quad (8)$$

For detailed descriptions of formula (8), refer to formula (7) or formula (6).

In still another possible implementation, $T_0$ may meet the following formula:

$$T_0 = \frac{M-1}{f_0} \quad (9)$$

or

$$T_0 = \frac{M-1}{\text{index}(\max(|DFT(\theta^{(b)})|)) - 1} \quad (10)$$

Numerators in formula (7) and formula (8) are determined based on the quantity of elements in the uncompressed CSI. It may be understood that numerators in formula (9) and formula (10) are determined based on a length of the uncompressed CSI.

It may be understood that, in a specific implementation, the foregoing formula (7) to formula (10) may be further adjusted. For example, in a manner of rounding up or rounding down, it is ensured that $T_0$ is an integer, so that calculation complexity is reduced as much as possible.

In still another possible implementation, $T_0$ may meet the following formula:

$$\frac{M}{f_0+1} \le T_0 \le \frac{M}{f_0-1} \quad (11)$$

Generally, a frequency component index(max($|DFT(\theta^{(b)})|$)) - 1 calculated by using the DFT is an integer, and a phase variation frequency of the uncompressed CSI may actually have a decimal place. Therefore, by searching for $T_0$ within the foregoing range by using formula (11), $T_0$ that optimizes formula (5) may be obtained.

In still another possible implementation, $f_0$ may meet the following formula:

$$\text{index}\big(\max(|DFT(\theta^{(b)})|)\big) - 2 \le f_0 \le \text{index}\big(\max(|DFT(\theta^{(b)})|)\big) - 1 \quad (12)$$

$T_0$ may meet the following formula:

$$T_0 = \frac{M}{\text{index}(\max(|DFT(\theta^{(b)})|))-1} + \Delta T_1, \Delta T_1 \in \left[0, \frac{M}{\text{index}(\max(|DFT(\theta^{(b)})|))-1} - \frac{M}{\text{index}(\max(|DFT(\theta^{(b)})|))-2}\right]$$

$$(13)$$

In still another possible implementation, $f_0$ may meet the following formula:

$$\text{index}\big(\max(|DFT(\theta^{(b)})|)\big) - 1 \le f_0 \le \text{index}\big(\max(|DFT(\theta^{(b)})|)\big) \quad (14)$$

$T_0$ may meet the following formula:

$$T_0 = \frac{M}{index(max(|DFT(\theta^{(b)})|))-1} - \Delta T_2, \Delta T_2 \in \left[0, \frac{M}{index(max(|DFT(\theta^{(b)})|))} - \frac{M}{index(max(|DFT(\theta^{(b)})|))-1}\right]$$

$$(15)$$

It may be understood that $T_0$ and $f_0$ shown in this embodiment of this application may be combined with each other. For example, formula (6) may be combined with formula (13) or formula (14). For another example, formula (12) may be combined with any one of formula (7) to formula (10). For another example, formula (14) may be combined with any one of formula (7) to formula (10). Examples are not listed one by one.

The following describes $k(n)$ in this embodiment of this application.

Because there is a cyclic prefix in a long training field (long training field, LTF) used for channel estimation, an actual time domain sampling position may shift leftward, which is represented as a phase shift $-|\varphi|$ in frequency domain. As shown in FIG. 5a, a specific value of $\varphi$ is not limited in this embodiment of this application. Therefore, in this embodiment of this application, $k(n) \le 0, \forall n \in \{1, ..., N\}$.

In this embodiment of this application, min{k(n)} = 0, and $max\{k(n)\}$ = 1. Therefore, a frequency range between different columns in the matrix **A** can be limited by using $k(n)$, where min{k(n)} = 0 indicates that the frequency is 0; max{k

$$\theta_{mn} = \frac{2\pi}{T_0} mk(n)$$

$(n)\}$ = 1 indicates a maximum frequency, and according to , the frequency in this case is $f_0$. For ease of representation, a value interval of $k(n)$ is set to a unit length, for example, k(1) = 0 and k(N) = 1. It may be understood that the following formula (16) to formula (21) are shown by using k(1) = 0 and k($N$) = 1 as examples. Examples of min{$k(n)$} = k($N$) = 0 and max{$k(n)$} = k(1) = 1 may be obtained by transforming the formulas shown below. Therefore, the examples are not shown one by one in this embodiment of this application.

In a possible implementation, $k(n)$ may meet the following formula:

$$k(n) = \alpha \times (\frac{1}{n^\beta} - 1) \quad (16)$$

where $\alpha$ is greater than 0, and $\beta$ is greater than 0.

In another possible implementation, $\alpha = \beta = 1$, and $k(n)$ may meet the following formula:

$$k(n) = \frac{1-n}{n} \ (17)$$

According to formula (17), when n is 1, 2, 3, ..., N respectively, $|k(n)|$ is equal to 0, 1/2, 2/3, ..., 1-N/N respectively. Correspondingly, with reference to formula (17) and formula (4), N rotation factors whose periods are respectively $\infty$, $2T_0$ $(1/2*f_0)$, $3/2T(2/3*f_0)$, $4/3T(3/4*f_0)$, ..., $N/(N-1)T(1-N/N*f_0)$ may be constructed. The rotation factor may be understood as an angle variation with a constant modulus value. Therefore, the constructed N rotation factors can effectively ensure that different n corresponds to different angular velocities, and effectively combine formula (16) with a phase variation characteristic of the uncompressed CSI. In addition, the constructed N rotation factors have more values around $f_0$, which can effectively ensure that phase variation periods of elements in more column vectors in the matrix **A** are around $T_0$, so that a phase variation rule of the elements in the matrix **A** is as close as possible to a phase variation rule of the uncompressed CSI, thereby improving accuracy of CSI compression.

In still another possible implementation, $k(n)$ may meet the following formula:

$$k(n) = \alpha \times (\frac{1-n}{N}) \ (18)$$

According to formula (18), when $\alpha = 1$, and n is 1, 2, 3, ..., N respectively, $|k(n)|$ is equal to 0, 1/N, 2/N, ..., 1-N/N, that is, N rotation factors whose periods are evenly distributed may be constructed, which is simple and convenient.

In still another possible implementation, $k(n)$ may meet the following formula:

$$k(n) = \frac{1-n}{N-1} \ (19)$$

In still another possible implementation, $k(n)$ may meet the following formula:

$$k(n) = \frac{1-n}{n} \frac{N-1}{N} \ (20)$$

For descriptions of formula (19) and formula (20), refer to formula (18).

In still another possible implementation, $k(n)$ may meet the following formula:

$$k(n) = \frac{1-n^{\alpha}}{n^{\alpha}} \frac{N^{\alpha}-1}{n^{\alpha}}, \ \alpha \in (0, +\infty) \ (21)$$

It may be understood that, for formula (21), as the parameter $\alpha$ increases, more data in the sequence $k(n)$ is distributed around $k(n) = 1$. According to the foregoing formula (4), it indicates that in the matrix **A,** phase variation periods of elements in more column vectors are around $T_0$.

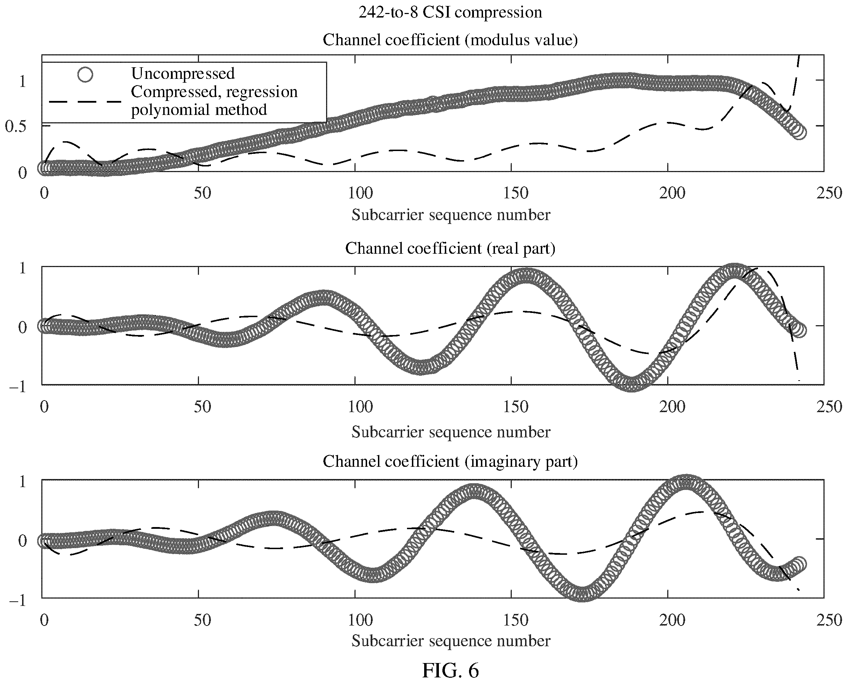

It may be understood that the method for compressing CSI based on the matrix **A** shown in this embodiment of this application may also be referred to as a CSI compression method based on a modified DFT matrix. Currently, there is another CSI compression method based on a regression polynomial. A transformation matrix **B** used in the CSI compression method based on the regression polynomial is a real matrix with M rows and N columns, and $B_{mn} = m^n$. Therefore, the matrix **B** is a real matrix, but both the vector **x** of the uncompressed CSI and the vector **b** of the compressed CSI are complex vectors. Therefore, lack of an imaginary part of the matrix **B** causes a decrease in compression quality and an increase in a compression error. FIG. 6 is a diagram of performance of a CSI compression method based on a regression polynomial method according to an embodiment of this application. As shown in FIG. 6, "uncompressed" represents the uncompressed CSI (that is, the vector **b**), and "compressed" represents the CSI (that is, **Ax**) restored by the receive end based on the compressed CSI received by the receive end. It can be learned from FIG. 6 that, because $B_{mn} = m^n$, and the matrix **B** is only a real matrix and is not effectively combined with the phase characteristic of the uncompressed CSI, in a case of a high compression rate (for example, 242 pieces of CSI are compressed to 8 pieces of CSI), compressed CSI obtained by using the CSI compression method based on the regression polynomial method causes an obvious deviation between the CSI restored by the receive end and the uncompressed CSI obtained by the transmit end. It may be understood that for descriptions of "compressed" in FIG. 6, reference may be made to the foregoing descriptions of FIG. 3 or the foregoing descriptions of formula (1).

The matrix **A** in this embodiment of this application is a complex matrix, and the matrix **A** effectively uses phase continuity and periodicity of the uncompressed CSI, thereby effectively improving accuracy of CSI compression. In the matrix **B,** all elements in a first row are 1, and an element in a last row and a last column is $M^N$. As M and N increase, $M^N \gg 1$ in the matrix **B** causes complexity and an error in solving the optimization problem to increase. In this embodiment of this application, modulus values of all elements in the matrix $\boldsymbol{A}$ are 1. Therefore, calculation complexity of the optimization problem is effectively reduced, and optimization estimation is implemented with high efficiency and low complexity.

The following describes a method provided in an embodiment of this application. As shown in FIG. 4, the method includes the following steps.

401: A transmit end determines a CSI report.

The CSI report includes first CSI, the first CSI is obtained based on second CSI and a transformation matrix, the transformation matrix is a complex matrix with M rows and N columns, modulus values of elements in the transformation matrix are 1, M is greater than N, M is a quantity of elements in the second CSI, and N is a quantity of elements in the first CSI.

That a transmit end determines a CSI report may also be understood as: the transmit end generates the CSI report; or the transmit end performs CSI compression based on a channel detection result (or a channel estimation result), compresses a quantity of pieces of CSI from M to N, and obtains the CSI report based on compressed CSI; or the transmit end performs channel detection based on a reference signal to obtain M pieces of CSI, compresses the M pieces of CSI to N pieces of CSI by using a CSI compression method based on a modified DFT matrix, and obtains the CSI report based on the N pieces of CSI. The reference signal is a signal used for channel detection. The reference signal may be sent by a receive end to the transmit end, or the like. A source of the reference signal is not limited in this embodiment of this application.

Generally, the channel detection result is determined based on a channel matrix and a subcarrier quantity, or it may be understood that the channel detection result is related to a channel matrix and a subcarrier quantity. The channel matrix represents channel information between all transmit antennas and all receive antennas. M shown in this embodiment of this application may be understood as channel detection results on M subcarriers between a transmit antenna and a receive antenna, or it may be understood that the transmit end performs CSI compression by using every M pieces of CSI as a group (for example only). Correspondingly, N in this embodiment of this application may be understood as a quantity of pieces of CSI obtained after channel detection results on M subcarriers between a transmit antenna and a receive antenna are compressed, or may be understood as a quantity of pieces of CSI obtained after CSI compression is performed on every M pieces of CSI. It may be understood that M in each group of CSI shown in this embodiment of this application is merely an example. Values of M in different groups of CSI may be the same, or certainly may be different. This is not limited in this embodiment of this application.

It should be noted that uncompressed CSI shown in this embodiment of this application includes M pieces of CSI. The M pieces of CSI may be CSI obtained by the transmit end based on M contiguous subcarriers between a transmit antenna and a receive antenna. Alternatively, the M pieces of CSI may be CSI obtained by the transmit end based on more than M contiguous subcarriers between a transmit antenna and a receive antenna. For example, the transmit end may obtain more than M pieces of CSI, and then select M pieces of CSI for feedback.

In an example, the CSI report may include the first CSI, M, N, and $T_0$; or the CSI report may include the first CSI, M, N, and $f_0$. In the CSI report, $T_0$ or $f_0$ is indicated clearly, so that the receive end can simply and clearly learn a phase period of the second CSI.

In another example, the CSI report may include the first CSI. Therefore, after receiving the CSI report, the receive end may learn M, N, and $f_0$ (or $T_0$) based on a CSI report including M, N, and $f_0$ (or $T_0$) before the CSI report, thereby effectively reducing signaling overheads.

In still another example, the CSI report may include the first CSI, M, and N. Therefore, after receiving the CSI report, the receive end may learn $f_0$ or $T_0$ based on a CSI report including $f_0$ or $T_0$ before the CSI report, thereby effectively reducing signaling overheads.

It may be understood that the first CSI shown in this embodiment of this application may be understood as compressed CSI (for example, the vector $\boldsymbol{x}$ shown above), and the second CSI may be understood as uncompressed CSI (for example, the vector $\boldsymbol{b}$ shown above).

For example, the CSI report may be included in a CSI frame at a media access control (media access control, MAC) layer. For example, in this embodiment of this application, a CSI report field (CSI report field) of a WLAN physical layer packet may be used to support a function of sending CSI from a transmit end (for example, a beamformee) to a receive end (for example, a beamformer) in a CSI frame at the MAC layer in an explicit feedback manner. When quantization and encoding are performed on the compressed CSI, according to whether different CSI is quantized by using a same quantity of bits, there may be two manners: quantization using the same quantity of bits and quantization using different quantities of bits. A quantization and encoding method is not described in detail in this embodiment of this application.

For example, for the compressed CSI quantized by using the same quantity of bits, the CSI report may be shown in Table 1,

where

$H_{N_r N_c}$ represents an $N_r$th row and an $N_c$th column of a MIMO channel matrix;

M indicates that when CSI compression is performed, every M pieces of CSI are compressed as a group of CSI;

N indicates that each group of CSI is compressed to N pieces of CSI during CSI compression;

$N_b$ is a quantity of bits determined by a coefficient size field of a MIMO control field, and represents a quantity of bits required when quantization and encoding are performed on a real part or an imaginary part of one piece of CSI;

$N_c$ represents a quantity of columns in the channel matrix;

$N_r$ represents a quantity of rows in the channel matrix; and

$N_s$ represents a quantity of subcarriers of each receive antenna.

It may be understood that, when the transmit end needs to feed back the CSI report shown in Table 1, the CSI report includes the first CSI, M, N, and $T_0$. For example, the CSI report includes compression results of CSI of multiple subcarriers between each transmit antenna and each receive antenna, that is, a plurality of pieces of first CSI, corresponding to $N_r \times N_c$ CSI compression results in Table 1, and corresponding $T_0$ when CSI compression is performed by using M pieces of CSI as a group corresponds to $T_{11}$, ..., $T_{1N_c}$, $T_{21}$, ..., $T_{2N_c}$, ..., $T_{Nr1}$, ..., $T_{N_rN_c}$ in Table 1.

Optionally, the CSI report may include compression results of CSI of multiple subcarriers between all transmit antennas and receive antennas in the channel matrix, M, N, and $T_0$ corresponding to each group of CSI compression results, as shown in Table 1. It may be understood that $T_0$ is used as an example in Table 1, and should not be construed as a limitation on this embodiment of this application.

Optionally, the CSI report may include compression results of CSI of multiple subcarriers between some transmit antennas and all receive antennas in the channel matrix. Optionally, the CSI report may include compression results of CSI of multiple subcarriers between all transmit antennas and some receive antennas in the channel matrix. Optionally, the CSI report may include compression results of CSI of multiple subcarriers between a transmit antenna and a receive antenna in the channel matrix. In the foregoing three cases, the CSI report may not include M, N, and $T_0$ (or $f_0$). The receive end may obtain M, N, and $f_0$ (or $T_0$) based on a CSI report including M, N, and $f_0$ (or $T_0$) before the CSI report, thereby effectively reducing signaling overheads.

Table 1

| Field (Field) | Length (bits) | Meaning (Meaning) |
|---|---|---|
| SNR of receive link 1 | 8 | SNR of a first receive link |
| ... | 8 | ... |
| SNR of receive link $N_r$ | 8 | SNR of an $N_r$th receive link |
| CSI compression parameter $M$ | 8 | CSI compression is performed on every M pieces of CSI as a group |
| CSI compression parameter $N$ | 8 | Each group of CSI is compressed to N pieces |
| Minimum phase period $T_{11}$ of contiguous subcarriers | 8 | Phase period of a contiguous subcarrier sequence in position $H_{11}$ in the channel matrix |
| Compressed CSI of multiple subcarriers in position $H_{11}$ in the channel matrix | $2 \times N_b \times \lceil N_s/M \rceil \times N$ | Compression result of CSI of multiple subcarriers between transmit antenna 1 and receive antenna 1 |
| ... | ... | ... |
| Minimum phase period $T_{1N_c}$ of contiguous subcarriers | 8 | Phase period of a contiguous subcarrier sequence in position $H_{1N_c}$ in the channel matrix |
| Compressed CSI of multiple subcarriers in position $H_{1N_c}$ in the channel matrix | $2 \times N_b \times \lceil N_s/M \rceil \times N$ | Compression result of CSI of multiple subcarriers between transmit antenna 1 and receive antenna $N_c$ |
| Minimum phase period $T_{21}$ of contiguous subcarriers | 8 | Phase period of a contiguous subcarrier sequence in position $H_{21}$ in the channel matrix |
| Compressed CSI of multiple subcarriers in position $H_{21}$ in the channel matrix | $2 \times N_b \times \lceil N_s/M \rceil \times N$ | Compression result of CSI of multiple subcarriers between transmit antenna 2 and receive antenna 1 |
| ... | ... | ... |
| Minimum phase period $T_{2N_c}$ of contiguous subcarriers | 8 | Phase period of a contiguous subcarrier sequence in position $H_{2N_c}$ in the channel matrix |

(continued)

| Field (Field) | Length (bits) | Meaning (Meaning) |
|---|---|---|
| Compressed CSI of multiple subcarriers in position $H_{2N_c}$ in the channel matrix | $2 \times N_b \times \lceil N_s/M \rceil \times N$ | Compression result of CSI of multiple subcarriers between transmit antenna 2 and receive antenna $N_c$ |
| ... | ... | ... |
| Minimum phase period $T_{N_r 1}$ of contiguous subcarriers | 8 | Phase period of a contiguous subcarrier sequence in position $H_{N_r 1}$ in the channel matrix |
| Compressed CSI of multiple subcarriers in position $H_{N_r 1}$ in the channel matrix | $2 \times N_b \times \lceil N_s/M \rceil \times N$ | Compression result of CSI of multiple subcarriers between transmit antenna $N_r$ and receive antenna 1 |
| ... | ... | ... |
| Minimum phase period $T_{N_r N_c}$ of contiguous subcarriers | 8 | Phase period of a contiguous subcarrier sequence in position $H_{N_r N_c}$ in the channel matrix |
| Compressed CSI of multiple subcarriers in position $H_{N_r N_c}$ in the channel matrix | $2 \times N_b \times \lceil N_s/M \rceil \times N$ | Compression result of CSI of multiple subcarriers between transmit antenna $N_r$ and receive antenna $N_c$ |

Optionally, the CSI report may include compression results of CSI of multiple subcarriers between all transmit antennas and receive antennas in the channel matrix, M, and N. In this case, the receive end may obtain, based on a CSI report including $T_0$ (or $f_0$) before the CSI report, $T_0$ corresponding to each group of CSI compression results. Therefore, the receive end can learn a CSI compression rate based on M and N in the CSI report, and further, when it is determined that the CSI compression rate in the CSI report is the same as a CSI compression rate before the CSI report, the receive end can obtain, based on the CSI report including $T_0$ (or $f_0$) before the CSI report, $T_0$ corresponding to each group of CSI compression results.

Optionally, the CSI report may further include indication information, and the indication information may be used to indicate a manner of performing CSI compression. For example, a field in which the indication information is located may occupy one bit. For example, if a value of the field in which the indication information is located is 0, it may indicate that the indication information is used to indicate that the manner of performing CSI compression is a subcarrier grouping method. For another example, if a value of the field in which the indication information is located is 1, it may indicate that the indication information is used to indicate that the manner of performing CSI compression is a CSI compression method based on a modified DFT matrix. For another example, the field in which the indication information is located may occupy two bits. For example, if a value of the field in which the indication information is located is 01, it may indicate that the indication information is used to indicate that the manner of performing CSI compression is a subcarrier grouping method. For another example, if a value of the field in which the indication information is located is 10, it may indicate that the indication information is used to indicate that the manner of performing CSI compression is a regression polynomial method. For another example, if a value of the field in which the indication information is located is 11, it may indicate that the indication information is used to indicate that the manner of performing CSI compression is a CSI compression method based on a modified DFT matrix. Alternatively, a quantity of bits occupied by the field in which the indication information is located may be three bits or the like. Examples are not listed one by one. It may be understood that the foregoing descriptions between values and meanings are merely examples, and should not be construed as a limitation on this embodiment of this application.

For example, a procedure in which the transmit end compresses the CSI may be specifically as follows:

for each of the $N_r$ rows in the channel matrix;
{
for each of the $N_c$ columns in the channel matrix;
{
CSI of $N_s$ contiguous subcarriers needs to be compressed;
a parameter $T_0$ is calculated based on the CSI of the $N_s$ contiguous subcarriers, and compression parameters M and N are selected according to a protocol to generate a transformation matrix;
for the CSI of the $N_s$ contiguous subcarriers, every M pieces of CSI are compressed to N pieces, and if the remaining pieces of CSI are less than M pieces, padding processing is performed;
{$N_b$-bit quantization and encoding are performed on a real part and an imaginary part of each piece of compressed CSI;
  }
  }
  }

For descriptions of parameters used in the foregoing procedure, refer to Table 1. Details are not described herein again. With reference to the transformation matrix shown in this embodiment of this application, the transmit end may determine the transformation matrix according to formula (1), formula (3), and formula (4), and perform CSI compression based on the transformation matrix determined by the transmit end. For a method for determining $T_0$ and $f_0$ in the transformation matrix, refer to formula (5), formula (6), formula (7), formula (8), formula (9), formula (10), formula (11), formula (12), formula (13), formula (14), or formula (15). For a method for determining $k(n)$ in the transformation matrix, refer to formula (16), formula (17), formula (18), formula (19), formula (20), and formula (21).

402: The transmit end sends the CSI report, and correspondingly, the receive end receives the CSI report.

403: The receive end processes the first CSI based on the transformation matrix to obtain the second CSI.

It may be understood that the CSI (for example, $Ax$ shown above) restored by the receive end based on the transformation matrix and the first CSI is different from the second CSI (for example, the vector $b$ shown above). For example, the difference may be caused by the optimization problem in formula (1). For example, the vector $x$ obtained by the transmit end may not make $\|Ax - b\|^2$ equal to 0. For another example, the difference may be caused by an error in quantization and encoding. Examples are not listed one by one herein. It may be understood that the CSI restored by the receive end based on the transformation matrix and the first CSI may also be understood as "compressed" in the accompanying drawings in the embodiments of this application.

In the foregoing formula (2), if $b(m)$, $m \in \{1, \cdots, M\}$ is used to represent an $m^{th}$ element of the CSI vector $b$, $b(m)$ may meet the following formula:

$$b(m) \approx \sum_{n=1}^{N} x(n) e^{j\theta_{mn}} \quad (22)$$

It may be understood that formula (2) and formula (22) may be understood as equivalent. Therefore, for descriptions of formula (22), refer to the foregoing descriptions. Details are not described herein again.

With reference to formula (4) and formula (17), $b(m)$ may meet the following formula:

$$b(m) \approx \sum_{n=1}^{N} x(n) e^{j\frac{2\pi}{T_0}m\left(\frac{1}{n}-1\right)} \quad (23)$$

It may be understood that formula (23) is used only as an example, and should not be construed as a limitation on this embodiment of this application.

For any $m \in \{1, ..., M\}$, formula (23) may be considered as a weighted sum of elements $e^{j\frac{2\pi}{T_0}m\left(\frac{1}{n}-1\right)}$ at a same position in each periodic sequence, which can approach and approximate elements $b(m)$ at a same position in an uncompressed CSI sequence. Therefore, the receive end can better approach and approximate the uncompressed CSI such as $b(m)$.

With reference to the transformation matrix shown in this application, the receive end may determine the transformation matrix based on formula (2) (or formula (22)) and formula (3) and formula (3), and process the first CSI based on the transformation matrix to restore the second CSI. For a method for determining $T_0$ and $f_0$ in the transformation matrix, refer to formula (5), formula (6), formula (7), formula (8), formula (9), formula (10), formula (11), formula (12), formula (13), formula (14), or formula (15). For a method for determining $k(n)$ in the transformation matrix, refer to formula (16), formula (17), formula (18), formula (19), formula (20), and formula (21).

It may be understood that, for the transmit end and the receive end, a method for determining $T_0$ or $f_0$ should be the same (for example, $T_0$ or $f_0$ is determined by using a same formula), and a method for determining $k(n)$ should also be the same (for example, $k(n)$ is determined by using a same formula). For example, the transmit end may store formula (1), formula (3), and formula (4), and the receive end may store formula (2), formula (3), and formula (4). For another example, both the transmit end and the receive end may store formula (1), formula (3), and formula (4), and the receive end may determine formula (2) based on formula (1). According to the method provided in this embodiment of this application, the transmit end performs CSI compression based on a channel detection result to compress a quantity of CSI from every M to N. Then the transmit end feeds back a compressed CSI vector $x$ and compression parameters M, N, and $T_0$. The receive end constructs a transformation matrix $A$ based on the compression parameters M, N, and $T_0$, and multiplies the constructed matrix $A$ by the received compressed CSI vector $x$, as an estimation result of an actual CSI vector $b$.

It may be understood that, for descriptions of the transformation matrix in this embodiment of this application, reference may be made to formula (1) to formula (21).

In an example, with reference to formula (4) and formula (17), when M = 6 and N = 3, the transformation matrix $A_{6\times3}$ is:

$$A_{6\times3} = \begin{bmatrix} e^{j0} & e^{-j\frac{\pi}{T}\times1} & e^{-j\frac{4\pi}{3T}\times1} \\ e^{j0} & e^{-j\frac{\pi}{T}\times2} & e^{-j\frac{4\pi}{3T}\times2} \\ e^{j0} & e^{-j\frac{\pi}{T}\times3} & e^{-j\frac{4\pi}{3T}\times3} \\ e^{j0} & e^{-j\frac{\pi}{T}\times4} & e^{-j\frac{4\pi}{3T}\times4} \\ e^{j0} & e^{-j\frac{\pi}{T}\times5} & e^{-j\frac{4\pi}{3T}\times5} \\ e^{j0} & e^{-j\frac{\pi}{T}\times6} & e^{-j\frac{4\pi}{3T}\times6} \end{bmatrix} = \begin{bmatrix} e^{j0} & e^{-j\frac{1\pi}{T}} & e^{-j\frac{4\pi}{3T}} \\ e^{j0} & e^{-j\frac{2\pi}{T}} & e^{-j\frac{8\pi}{3T}} \\ e^{j0} & e^{-j\frac{3\pi}{T}} & e^{-j\frac{12\pi}{3T}} \\ e^{j0} & e^{-j\frac{4\pi}{T}} & e^{-j\frac{16\pi}{3T}} \\ e^{j0} & e^{-j\frac{5\pi}{T}} & e^{-j\frac{20\pi}{3T}} \\ e^{j0} & e^{-j\frac{6\pi}{T}} & e^{-j\frac{24\pi}{3T}} \end{bmatrix} \quad (24)$$

It may be understood that formula (24) is merely an example. In a specific implementation, after parameters M and N are known, the transformation matrix $A$ may be extended to any dimension. Specific forms of the transformation matrix are not listed one by one in this embodiment of this application.

Optionally, all elements in a first row in the transformation matrix may be equal. For example, all elements in a first column in the transformation matrix are equal, and all the elements in the first row in the transformation matrix are equal.

With reference to formula (4) and formula (17), $A_{mn} = e^{j\frac{2\pi}{T}m\left(\frac{1}{n}-1\right)}$ is adjusted to $A_{mn} = e^{j\frac{2\pi}{T}(m-1)\left(\frac{1}{n}-1\right)}$, as shown below:

$$A_{6\times3} = \begin{bmatrix} e^{j0} & e^{j0} & e^{j0} \\ e^{j0} & e^{-j\frac{\pi}{T}\times1} & e^{-j\frac{4\pi}{3T}\times1} \\ e^{j0} & e^{-j\frac{\pi}{T}\times2} & e^{-j\frac{4\pi}{3T}\times2} \\ e^{j0} & e^{-j\frac{\pi}{T}\times3} & e^{-j\frac{4\pi}{3T}\times3} \\ e^{j0} & e^{-j\frac{\pi}{T}\times4} & e^{-j\frac{4\pi}{3T}\times4} \\ e^{j0} & e^{-j\frac{\pi}{T}\times5} & e^{-j\frac{4\pi}{3T}\times5} \end{bmatrix} = \begin{bmatrix} e^{j0} & e^{j0} & e^{j0} \\ e^{j0} & e^{-j\frac{\pi}{T}} & e^{-j\frac{4\pi}{3T}} \\ e^{j0} & e^{-j\frac{2\pi}{T}} & e^{-j\frac{8\pi}{3T}} \\ e^{j0} & e^{-j\frac{3\pi}{T}} & e^{-j\frac{12\pi}{3T}} \\ e^{j0} & e^{-j\frac{4\pi}{T}} & e^{-j\frac{16\pi}{3T}} \\ e^{j0} & e^{-j\frac{5\pi}{T}} & e^{-j\frac{20\pi}{3T}} \end{bmatrix} \quad (25)$$

It may be understood that formula (25) is merely an example. For example, all elements in a last row in the transformation matrix may be equal. Examples are not listed one by one herein. Based on a design principle of the transformation matrix in this embodiment of this application, all variations of the transformation matrix fall within the protection scope of embodiments of this application. For example, after the transformation matrix is obtained based on formula (3) and formula (4), setting all elements in at least one column in the transformation matrix to be the same, or setting all elements in at least one row in the transformation matrix to be the same, or setting at least two columns in the transformation matrix to be the same, or setting at least two rows in the transformation matrix to be the same is a variation of the transformation matrix. For another example, performing column permutation, row permutation, and the like on the transformation matrix also belongs to variations of the transformation matrix. The variations of the transformation matrix are not listed one by one.

For example, M = 32, N = 8, and an uncompressed CSI vector $b$ is:

$b$ = [0.451378116153413 + 0.161206470054790j, 0.483619410164371 + 0.0322412940109581j, 0.515860704175329 - 0.0322412940109581j, 0.548101998186287 - 0.0967238820328741j, 0.548101998186287 - 0.161206470054790j, 0.515860704175329 - 0.225689058076706j, 0.515860704175329 - 0.290171646098622j, 0.483619410164371 - 0.322412940109581j, 0.419136822142455 - 0.386895528131497j, 0.354654234120539 - 0.419136822142455j, 0.290171646098622 - 0.451378116153413j, 0.225689058076706 - 0.515860704175329j, 0.161206470054790 - 0.515860704175329j, 0.00000000000000 - 0.548101998186287j, -0.0967238820328741 - 0.515860704175329j, -0.161206470054790 - 0.419136822142455j, -0.193447764065748 - 0.419136822142455j, -0.257930352087664 - 0.354654234120539j, -0.354654234120539 - 0.290171646098622j, -0.419136822142455 - 0.193447764065748j, -0.483619410164371 - 0.0322412940109581j, -0.483619410164371 + 0.0322412940109581j, -0.515860704175329 + 0.128965176043832j, -0.451378116153413 + 0.257930352087664j, -0.386895528131497 + 0.386895528131497j, -0.290171646098622 + 0.483619410164371j, -0.257930352087664 + 0.548101998186287j, -0.193447764065748 + 0.644825880219161j, -0.0967238820328741 + 0.741549762252035j, 0.0644825880219161 + 0.806032350273951j, 0.193447764065748 + 0.934997526317784j, 0.354654234120539 + 0.934997526317784j]$^T$. It may be understood that the vector **b** is a column vector, and the vector representation shown herein has been normalized by using a maximum modulus value of a sequence.

The phase period $T_0 = 61$ may be calculated based on the uncompressed CSI vector **b**; and the transformation matrix **A** may be calculated based on parameters M, N, and $T_0$. After compression optimization is performed on the vector **b** based on the transformation matrix, the compressed CSI vector **x** with a length of N = 8 may be obtained as follows: **x** = [-2.34816644461573 + 20.1896480067683j, 720.803500484608 - 634.738291246197j, -4862.01245868484 + 2795.95573115259j, 4466.28697492887 - 3770.19074366863j, 3768.86799665697 + 1628.18866505662j, 22141.6789052461 + 612.943304910265j, - 57028.7979219074 - 2148.65375745227j, 30795.9221407766 + 1496.50237265181j]$^T$. It may be understood that the vector **x** is a column vector.

It may be understood that for a method for obtaining a parameter related to the transformation matrix by the receive end, refer to related descriptions in step 401. For example, the receive end may obtain M, N, and $T_0$ (or $f_0$) based on the CSI report received in step 402. For another example, the receive end may obtain M, N, and $f_0$ (or $T_0$) based on a CSI report including M, N, and $f_0$ (or $T_0$) before the CSI report received in step 402. For another example, the receive end may obtain $f_0$ or $T_0$ based on a CSI report including $f_0$ or $T_0$ before the CSI report received in step 402, and obtain M and N based on the CSI report received in step 402.

Optionally, when the CSI report includes the indication information, the receive end may obtain, based on the indication information, a compression method used when the transmit end performs CSI compression, to process the first CSI in the CSI report based on the corresponding compression method.

For example, after obtaining the second CSI, the receive end may perform beamforming by using the second CSI. For another example, after obtaining the second CSI, the receive end may perform sensing by using the second CSI. A specific function of the second CSI is not limited in this embodiment of this application.

In this embodiment of this application, the transmit end compresses the second CSI by using the transformation matrix, to obtain the first CSI, where a quantity of rows in the transformation matrix corresponds to the quantity of elements in the second CSI (which may also be understood as the uncompressed CSI), and a quantity of columns in the transformation matrix corresponds to the quantity of elements in the first CSI (which may also be understood as the compressed CSI). In the method for compressing the CSI by using the transformation matrix according to this embodiment of this application, because M is greater than N, overheads occupied by the compressed CSI are less than overheads occupied by the uncompressed CSI. Therefore, CSI feedback overheads can be effectively reduced. In addition, this embodiment of this application may be further applied to different M and N, to implement a relatively long compression length and meet massive MIMO and multi-subcarrier scenarios.

Generally, modulus values of the uncompressed CSI vary slowly, that is, the uncompressed CSI has similar (or approximate) modulus values. Therefore, by setting the modulus values of the elements in the transformation matrix to be the same and all to 1, it is possible to ensure that modulus values of elements in restored CSI are also similar (or approximate) when the receive end restores the CSI based on the compressed CSI and the transformation matrix. Therefore, accuracy of the CSI restored by the receive end is ensured, and compression performance of CSI compression is improved.

The following describes a simulation result provided in this embodiment of this application.

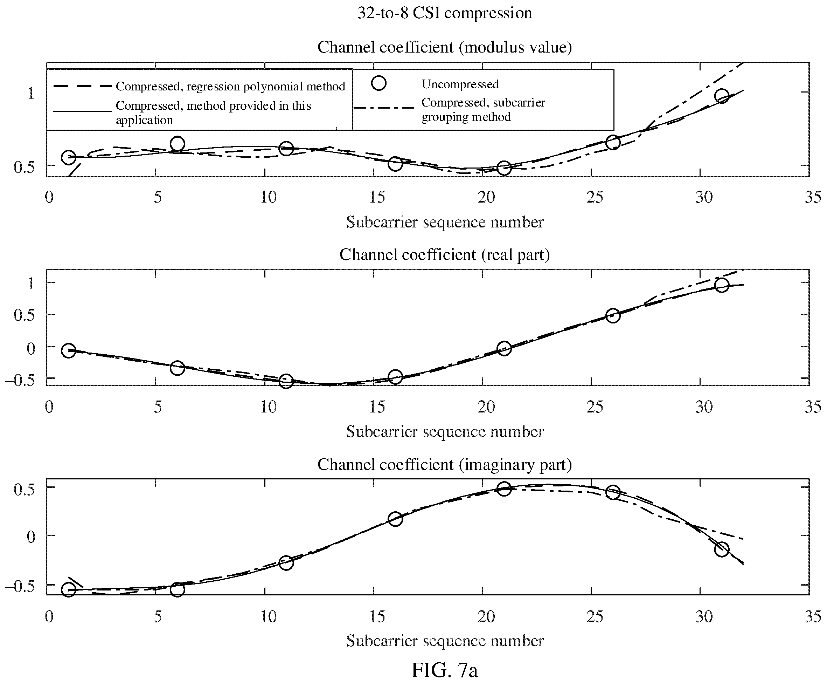

For simplicity, in this embodiment of this application, CSI of a group of subcarriers on a pair of transmit and receive antennas is considered. Normalization processing is performed on each group of CSI, that is, each piece of CSI is divided by a maximum modulus value of a plurality of pieces of CSI in the group. FIG. 7a to FIG. 7c respectively show performance comparison at different compression rates. Subcarrier grouping method: CSI data is not sent for every subcarrier. Instead, CSI of multiple subcarriers of each antenna is grouped, and only one piece of CSI is transmitted for each group. Regression polynomial method: It is a CSI compression method based on a regression polynomial matrix and a mathematical model of two-norm minimization.

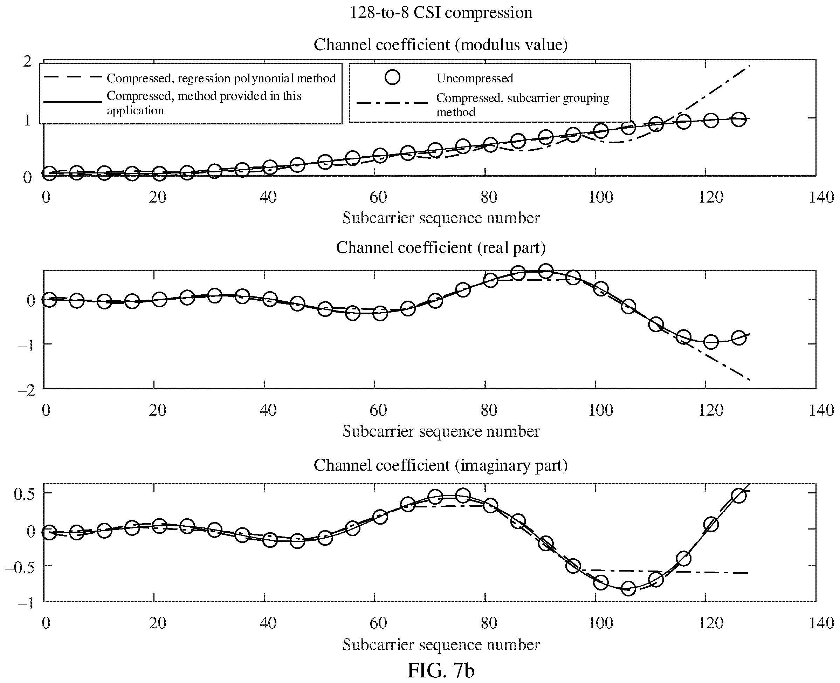

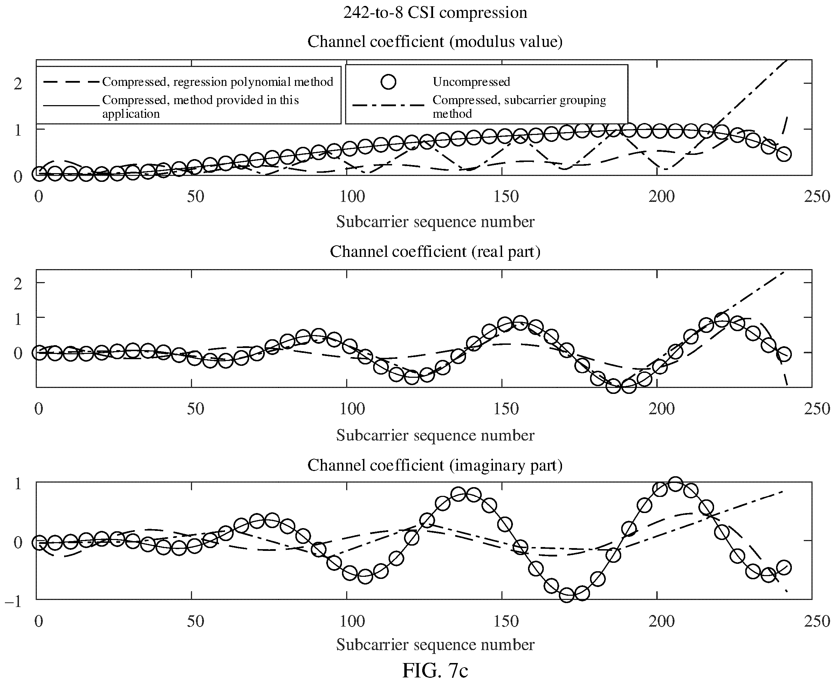

It may be understood that "uncompressed" shown in each of FIG. 7a to FIG. 7c represents a specific quantity of pieces of CSI marked from 32 pieces of CSI, 128 pieces of CSI, or 242 pieces of CSI, and circles shown in FIG. 7a to FIG. 7c should not be understood as quantities of pieces of uncompressed CSI. In other words, the circles shown in FIG. 7a to FIG. 7c are merely examples of marked CSI. It may be understood that, for descriptions of "compressed" in FIG. 7a, FIG. 7b, and FIG. 7c, reference may be made to the foregoing descriptions of FIG. 3 or the foregoing descriptions of formula (1).

FIG. 7a shows compression performance when CSI of a group of 32 subcarriers is compressed to 8 pieces of CSI in different methods. It can be learned from FIG. 7a that an obvious error occurs at a boundary point in the subcarrier grouping method and the regression polynomial method. For the subcarrier grouping method, in an actual application, two to four subcarriers are generally grouped into a group to ensure compression quality. As a compression rate increases, the compression quality obviously decreases. The regression polynomial method increases the CSI compression rate at the cost of higher complexity. The CSI compression method based on a modified DFT matrix according to this embodiment of this application is effectively combined with a phase variation characteristic of uncompressed CSI, and therefore effectively improves compression performance of CSI compression. Even if the compression rate is increased, accuracy of CSI compression can still be ensured by using the method provided in this embodiment of this application.

FIG. 7b shows compression performance when CSI of a group of 128 subcarriers is compressed to 8 pieces of CSI in different methods. It can be learned from FIG. 7b that, as the compression rate increases, a larger error occurs in the subcarrier grouping, especially for raw data completely disassociated near a boundary point.

FIG. 7c shows compression performance when CSI of a group of 242 subcarriers is compressed to 8 pieces of CSI in different methods. It can be learned from FIG. 7b that a relatively large error also occurs in the regression polynomial method, and a compression quality requirement cannot be met.

It can be learned from FIG. 7a, FIG. 7b, and FIG. 7c that the CSI compression method based on a modified DFT matrix according to this embodiment of this application is effectively combined with an angle variation rule of the uncompressed CSI, and therefore can always meet compression quality and have better CSI compression performance. The CSI compression method based on a modified DFT matrix according to this embodiment of this application is applicable to different compression rates, and CSI compression performance can be ensured for any compression rate.

It may be understood that "compressed" shown in FIG. 7a, FIG. 7b, and FIG. 7c refers to CSI restored by the receive end by using different methods, and "uncompressed" refers to initial CSI obtained by the transmit end by performing channel estimation by using a pilot channel.

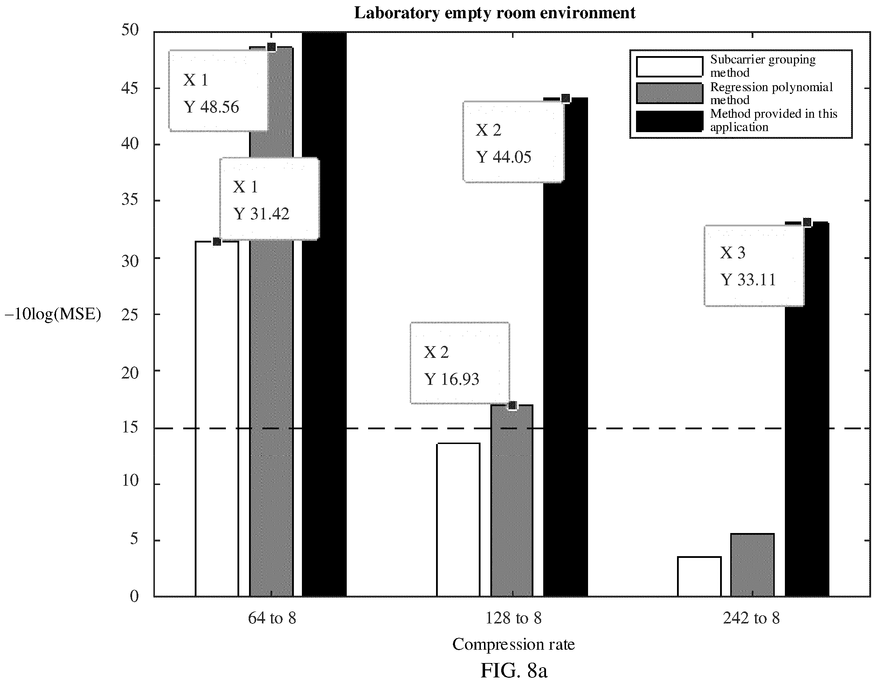

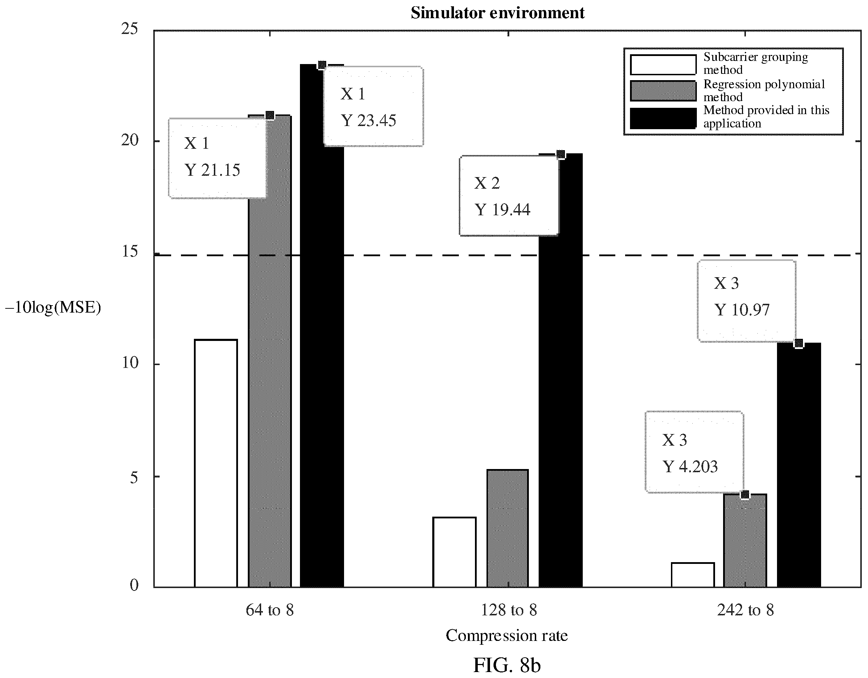

FIG. 8a and FIG. 8b respectively show comparison of average performance of compression methods in a laboratory empty room environment and a simulator environment, taking 10,000 groups of channel data samples into account, where each group of channel data samples may include a group of CSI. In this application, a mean square error (mean squared error, MSE) between the CSI restored by the receive end and uncompressed CSI data is used as a performance indicator for comparison. In this application, for a group of CSI samples, $MSE = 1/M * \|\boldsymbol{Ax} - \boldsymbol{b}\|^2$. Considering that a difference between values in different methods is excessively large, a y-axis is converted in units of dB through a log operation and a negative sign is added before. Therefore, in FIG. 8a and FIG. 8b, a higher bar represents a lower MSE and better performance. As shown in FIG. 8a, in the laboratory environment, it can be learned that, as a compression rate increases, MSE performance of the compression method based on a modified DFT matrix according to this embodiment of this application is best at any compression rate. In 242-to-8 compression, compared with the regression polynomial method, the method provided in this embodiment of this application effectively reduces an error by about 15 dB. As shown in FIG. 8b, in the simulator environment, performance of all CSI compression methods is degraded to some extent compared with an experiment in the laboratory empty room environment. However, the method provided in this embodiment of this application still has best MSE performance at any compression rate. In 242-to-8 compression, compared with the regression polynomial method, the method provided in this embodiment of this application effectively reduces an error by about 7 dB. Optionally, a compression quality threshold is set to -15 dB. As can be learned from FIG. 8a, the subcarrier grouping method can meet the quality requirement in 64-to-8 compression, the regression polynomial method can meet the quality requirement in 128-to-8 compression, and the method provided in this embodiment of this application can meet the quality requirement in 242-to-8 compression. As can be learned from FIG. 8b, the regression polynomial method can meet the quality requirement in 64-to-8 compression, and the method provided in this embodiment of this application can meet the quality requirement in 128-to-8 compression. Therefore, according to the method provided in this embodiment of this application, the compression rate is increased. For any compression length, the method provided in this embodiment of this application has a smaller mean square error. Therefore, the error is effectively reduced, and compression accuracy is improved.

A communication apparatus provided in an embodiment of this application is described below.

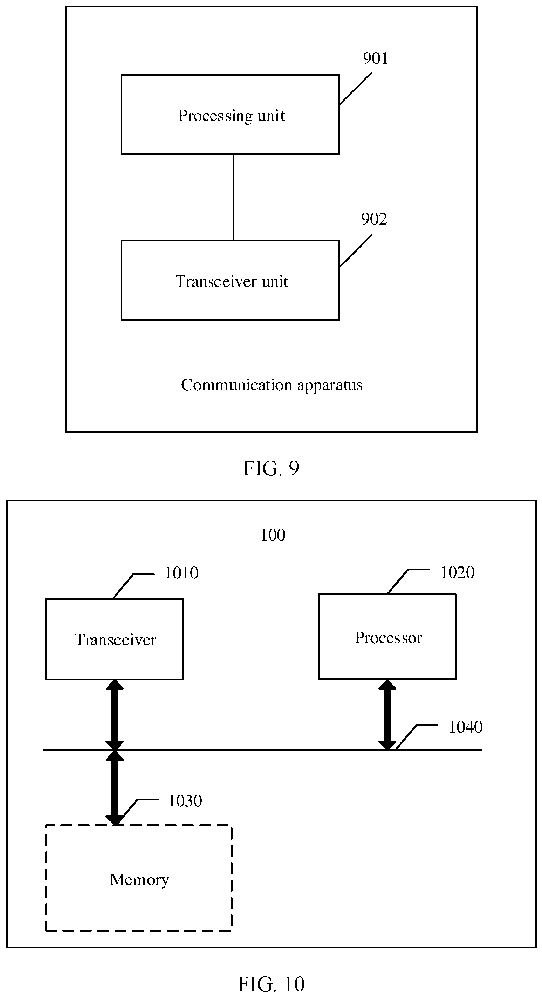

In this application, the communication apparatus is divided into functional modules based on the foregoing method embodiments. For example, the functional modules may be obtained through division in a one-to-one correspondence with the functions, or two or more functions may be integrated into one processing module. The integrated module may be implemented in a form of hardware, or may be implemented in a form of a software functional module. It should be noted that division of the modules in this application is an example. The division is merely logical function division and may be other division in an actual implementation. The following describes in detail communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901 and a transceiver unit 902.

In some embodiments of this application, the communication apparatus may be the transmit end or the chip shown above, and the chip may be disposed in the transmit end. In other words, the communication apparatus may be configured to perform the steps, the functions, or the like performed by the transmit end in the foregoing method embodiments (including FIG. 4).

The processing unit 901 is configured to determine a CSI report; and the transceiver unit 902 is configured to send the CSI report.

It may be understood that the processing unit 901 may be configured to determine the CSI report and output the CSI report, so that the transceiver unit 902 sends the CSI report.

In some other embodiments of this application, the communication apparatus may be the receive end or the chip shown above, and the chip may be disposed in the receive end. In other words, the communication apparatus may be configured to perform the steps, the functions, or the like performed by the receive end in the foregoing method embodiments (including FIG. 4).

The transceiver unit 902 is configured to receive a CSI report; and the processing unit 901 is configured to process a first CSI report based on a transformation matrix to obtain second CSI.

It may be understood that the processing unit 901 may be configured to input the CSI report, and process the first CSI report based on the transformation matrix to obtain the second CSI.

Optionally, the processing unit 901 is specifically configured to: determine the transformation matrix based on $T_0$ or $f_0$, and M and N; and process the first CSI based on the transformation matrix to obtain the second CSI.

It may be understood that the detailed descriptions of the transceiver unit and the processing unit shown in this embodiment of this application are merely examples. For specific functions, steps, or the like performed by the transceiver unit and the processing unit, refer to the foregoing method embodiments. Details are not described herein again.

In the foregoing embodiments, for descriptions of the first CSI, the second CSI, the transformation matrix, M, N, $T_0$ or $f_0$, or the like, refer to the descriptions in the foregoing method embodiments. Details are not described herein again.

The foregoing describes the communication apparatus in this embodiment of this application. The following describes possible product forms of the communication apparatus. It should be understood that a product in any form that has a function of the communication apparatus in FIG. 9 falls within the protection scope of embodiments of this application. It should be further understood that the following descriptions are merely examples, and the product form of the communication apparatus in this embodiment of this application is not limited thereto.

In a possible implementation, in the communication apparatus shown in FIG. 9, the processing unit 901 may be one or more processors. The transceiver unit 902 may be a transceiver. Alternatively, the transceiver unit 902 may be a sending unit and a receiving unit, where the sending unit may be a transmitter, the receiving unit may be a receiver, and the sending unit and the receiving unit are integrated into one component, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information, and then processed information is input into the processor.

As shown in FIG. 10, a communication apparatus 100 includes one or more processors 1020 and a transceiver 1010.

In some embodiments of this application, the communication apparatus may be configured to perform the steps, the functions, or the like performed by the transmit end in the foregoing method embodiments (including FIG. 4).

The processor 1020 is configured to determine a CSI report; and the transceiver 1010 is configured to send the CSI report.

In some other embodiments of this application, the communication apparatus may be configured to perform the steps, the functions, or the like performed by the receive end in the foregoing method embodiments (including FIG. 4).

The transceiver 1010 is configured to receive a CSI report; and the processor 1020 is configured to process a first CSI report based on a transformation matrix to obtain second CSI.

Optionally, the processor 1020 is specifically configured to: determine the transformation matrix based on $T_0$ or $f_0$, and M and N; and process the first CSI based on the transformation matrix to obtain the second CSI.

It may be understood that the detailed descriptions of the transceiver and the processor shown in this embodiment of this application are merely examples. For specific functions, steps, or the like performed by the transceiver and the processor, refer to the foregoing method embodiments. Details are not described herein again.

In the foregoing embodiments, for descriptions of the first CSI, the second CSI, the transformation matrix, M, N, $T_0$ or $f_0$, or the like, refer to the descriptions in the foregoing method embodiments. Details are not described herein again.

In each implementation of the communication apparatus shown in FIG. 10, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 100 may further include one or more memories 1030, configured to store program instructions, data, and/or the like. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor. Optionally, the one or more memories may store at least one of formula (1) to formula (25). Optionally, the one or more memories may store a transformation matrix in a specific form. For example, for given M and N, the form of the transformation matrix may be fixed.

In embodiments of this application, a specific connection medium among the transceiver 1010, the processor 1020, and the memory 1030 is not limited. In this embodiment of this application, the memory 1030, the processor 1020, and the transceiver 1010 are connected through a bus 1040 in FIG. 10. The bus is represented by a bold line in FIG. 10. A connection manner of other components is merely an example for description and is not limited thereto. The bus may be classified into an address bus, a data bus, a control bus, and the like. For ease of representation, only one bold line is used for representing the bus in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like, and may implement or perform the methods, steps, and logical block diagrams disclosed in embodiments of this application. The general-purpose processor may be a microprocessor or any conventional processor or the like. The steps of the methods disclosed with reference to embodiments of this application may be directly performed and completed by using a hardware processor, or may be performed and completed by using a combination of hardware in the processor and a software module, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in this embodiment of this application may alternatively be a circuit or any other apparatus that can implement a storage function, and is configured to store program instructions and/or data.

For example, the processor 1020 is mainly configured to process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to receive data input by a user and output data to the user.

After the communication apparatus is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may further have more components than those in FIG. 10, and the like. This is not limited in this embodiment of this application. The methods performed by the processor and the transceiver are merely examples. For specific steps performed by the processor and the transceiver, refer to the methods described above.

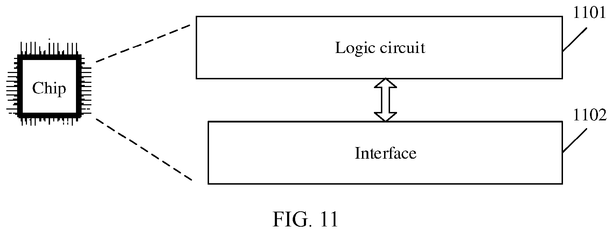

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, the communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC) chip, or the like. The interface 1102 may be a communication interface, an input/output interface, a pin, or the like. For example, FIG. 11 shows an example in which the communication apparatus is a chip. The chip includes the logic circuit 1101 and the interface 1102.

In this embodiment of this application, the logic circuit and the interface may be coupled to each other. A specific manner of connection between the logic circuit and the interface is not limited in this embodiment of this application.

In some embodiments of this application, the communication apparatus may be configured to perform the steps, the functions, or the like performed by the transmit end in the foregoing method embodiments (including FIG. 4).

The logic circuit 1101 is configured to determine a CSI report; and the interface 1102 is configured to output the CSI report.

Optionally, the communication apparatus may further include a memory. The memory may be configured to store at least one of formula (1) to formula (25).

In still some other embodiments of this application, the communication apparatus may be configured to perform the steps, the functions, or the like performed by the receive end in the foregoing method embodiments (including FIG. 4).

The interface 1102 is configured to input a CSI report; and the logic circuit 1101 is configured to process a first CSI report based on a transformation matrix to obtain second CSI.

Optionally, the logic circuit 1101 is specifically configured to: determine the transformation matrix based on $T_0$ or $f_0$, and M and N; and process the first CSI based on the transformation matrix to obtain the second CSI.

Optionally, the communication apparatus may further include a memory. The memory may be configured to store at least one of formula (1) to formula (25).

For a specific manner of the transformation matrix stored in the transmit end and the receive end, refer to the foregoing description. Details are not described herein again.

It may be understood that detailed descriptions of the logic circuit and the interface shown in this embodiment of this application are merely examples. For specific functions, steps, or the like performed by the logic circuit and the interface, refer to the foregoing method embodiments. Details are not described herein again.

In the foregoing embodiments, for descriptions of the first CSI, the second CSI, the transformation matrix, M, N, $T_0$ or $f_0$, or the like, refer to the descriptions in the foregoing method embodiments. Details are not described herein again.

It may be understood that the communication apparatus shown in this embodiment of this application may implement the methods provided in embodiments of this application in a form of hardware, or may implement the methods provided in embodiments of this application in a form of software. This is not limited in this embodiment of this application.

An embodiment of this application further provides a wireless communication system. The wireless communication system includes a transmit end and a receive end. The transmit end and the receive end may be configured to perform the method in any one of the foregoing embodiments (as shown in FIG. 4).

In addition, this application further provides a computer program. The computer program is used to implement operations and/or processing performed by the transmit end in the methods provided in this application.

This application further provides a computer program. The computer program is used to implement operations and/or processing performed by the receive end in the methods provided in this application.

This application further provides a computer-readable storage medium. The computer-readable storage medium stores computer code. When the computer code is run on a computer, the computer is enabled to perform operations and/or processing performed by the transmit end in the methods provided in this application.

This application further provides a computer-readable storage medium. The computer-readable storage medium stores computer code. When the computer code is run on a computer, the computer is enabled to perform operations and/or processing performed by the receive end in the methods provided in this application.

This application further provides a computer program product. The computer program product includes computer code or a computer program. When the computer code or the computer program is run on a computer, operations and/or processing performed by the transmit end in the methods provided in this application are/is performed.

This application further provides a computer program product. The computer program product includes computer code or a computer program. When the computer code or the computer program is run on a computer, operations and/or processing performed by the receive end in the methods provided in this application are/is performed.

In the several embodiments provided in this application, it should be understood that the disclosed system, apparatus, and method may be implemented in other manners. For example, the foregoing apparatus embodiments are merely examples. For example, division of the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on an actual requirement, to achieve technical effects of the solutions provided in embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel state information CSI processing method, wherein the method comprises:

   determining a CSI report, wherein the CSI report comprises first CSI, the first CSI is obtained based on second CSI and a transformation matrix, the transformation matrix is a complex matrix with M rows and N columns, modulus values of elements in the transformation matrix are 1, M is greater than N, M is a quantity of elements in the second CSI, and N is a quantity of elements in the first CSI; and
   sending the CSI report.

2. The method according to claim 1, wherein angles of elements in at least one column in the transformation matrix vary periodically, and angles of elements in different columns vary with different periods.

3. The method according to claim 1 or 2, wherein angles of elements in the transformation matrix are determined based on M, N, and an angle period of the second CSI; or
   angles of elements in the transformation matrix are determined based on M, N, and frequency components of a discrete Fourier transform DFT of angles of the second CSI.

4. The method according to any one of claims 1 to 3, wherein an angle of an element in an $m^{th}$ row and an $n^{th}$ column in the transformation matrix meets the following formula:

$$\theta_{mn} = \frac{2\pi}{T_0} \times m \times k(n),$$

   wherein
   $T_0$ is related to an angle of the second CSI, m is an integer greater than 0 and less than or equal to M, n is an integer greater than 0 and less than or equal to N, and $k(n)$ is a function of n.

5. The method according to claim 4, wherein $T_0$ is determined based on a frequency component of the DFT of the angles of the second CSI.

6. The method according to claim 5, wherein $T_0$ meets the following formula:

$$T_0 = \frac{M}{f_0},$$

wherein
$f_0$ represents a frequency component corresponding to a maximum value of modulus values of coefficients in the frequency components of the DFT of the angles of the second CSI.

7. The method according to any one of claims 4 to 6, wherein the function of n meets the following formula:

$$k(n) = \alpha \times (\frac{1}{n^{\beta}} - 1),$$

or

$$k(n) = \alpha \times (\frac{1-n}{N}),$$

wherein
$\alpha$ is greater than 0, and $\beta$ is greater than 0.

8. The method according to any one of claims 1 to 7, wherein the CSI report further comprises at least one piece of the following information: M, N, $T_0$, and $f_0$.

9. A channel state information CSI processing method, wherein the method comprises:

receiving a CSI report, wherein the CSI report comprises first CSI; and
processing the first CSI based on a transformation matrix to obtain second CSI, wherein the transformation matrix is a complex matrix with M rows and N columns, modulus values of elements in the transformation matrix are 1, M is greater than N, M is a quantity of elements in the second CSI, and N is a quantity of elements in the first CSI.

10. The method according to claim 9, wherein the method further comprises:

obtaining at least one piece of the following information: M, N, $T_0$, and $f_0$, wherein $T_0$ is related to an angle of the second CSI, and $f_0$ is determined based on $T_0$; and
the processing the first CSI based on the transformation matrix to obtain second CSI comprises:

determining the transformation matrix based on $T_0$ or $f_0$, and M and N; and
processing the first CSI based on the transformation matrix to obtain the second CSI.

11. The method according to claim 10, wherein angles of elements in at least one column in the transformation matrix vary periodically, and angles of elements in different columns vary with different periods.

12. The method according to any one of claims 9 to 11, wherein an angle of an element in an $m^{th}$ row and an $n^{th}$ column in the transformation matrix meets the following formula:

$$\theta_{mn} = \frac{2\pi}{T_0} \times m \times k(n),$$

wherein
m is an integer greater than 0 and less than or equal to M, n is an integer greater than 0 and less than or equal to N, and $k(n)$ is a function of n.

13. The method according to claim 12, wherein $T_0$ meets the following formula:

$$T_0 = \frac{M}{f_0},$$

wherein
$f_0$ represents a frequency component corresponding to a maximum value of modulus values of coefficients in frequency components of a DFT of angles of the second CSI.

14. The method according to claim 12 or 13, wherein the function of n meets the following formula:

$$k(n) = \alpha \times (\frac{1}{n^\beta} - 1),$$

or

$$k(n) = \alpha \times (\frac{1-n}{N}),$$

wherein
$\alpha$ is greater than 0, and $\beta$ is greater than 0.

15. A communication apparatus, comprising units configured to perform the method according to any one of claims 1 to 14.

16. A communication apparatus, comprising a processor and a memory, wherein

the memory is configured to store instructions; and
the processor is configured to execute the instructions, so that the method according to any one of claims 1 to 14 is performed.

17. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 14 is performed.

18. A computer-readable storage medium, wherein the computer-readable storage medium is configured to store a computer program, and when the computer program is executed, the method according to any one of claims 1 to 14 is performed.

19. A communication system, wherein the communication system comprises a transmit end and a receive end, the transmit end is configured to perform the method according to any one of claims 1 to 8, and the receive end is configured to perform the method according to any one of claims 9 to 14.

FIG. 1

FIG. 2

128-to-8 CSI compression

Channel coefficient (modulus value)

Subcarrier sequence number

Channel coefficient (real part)

Subcarrier sequence number

Channel coefficient (imaginary part)

Subcarrier sequence number

FIG. 3

EP 4 580 080 A1

```
┌─────────────────┐                    ┌─────────────────┐
│  Transmit end   │                    │  Receive end    │
└─────────────────┘                    └─────────────────┘
         │                                      │
         │                                      │
┌────────┴──────────────────┐  401              │
│  Determine a CSI report    │                  │
└────────────────────────────┘                  │
         │                                      │
         │            402                       │
         │        CSI report                    │
         │──────────────────────────────────────▶│
         │                                      │
         │              ┌───────────────────────┴──────────────┐  403
         │              │ Process first CSI based on a transformation │
         │              │   matrix to obtain second CSI          │
         │              └──────────────────────────────────────┘
         │                                      │
         │                                      │
```

FIG. 4

Phases of M = 242 initial CSI sequences on an antenna

FIG. 5a

Modulus value of a 242-point DFT transformation of phases
of M = 242 initial CSI sequences b

FIG. 5b

242-to-8 CSI compression

Channel coefficient (modulus value)

Subcarrier sequence number

Channel coefficient (real part)

Subcarrier sequence number

Channel coefficient (imaginary part)

Subcarrier sequence number

FIG. 6

32-to-8 CSI compression

Channel coefficient (modulus value)

Subcarrier sequence number

Channel coefficient (real part)

Subcarrier sequence number

Channel coefficient (imaginary part)

Subcarrier sequence number

FIG. 7a

EP 4 580 080 A1

128-to-8 CSI compression

Channel coefficient (modulus value)

Subcarrier sequence number

Channel coefficient (real part)

Subcarrier sequence number

Channel coefficient (imaginary part)

Subcarrier sequence number

FIG. 7b

EP 4 580 080 A1

242-to-8 CSI compression

Channel coefficient (modulus value)

— — — Compressed, regression polynomial method
———— Compressed, method provided in this application
○ Uncompressed
—·—·— Compressed, subcarrier grouping method

Subcarrier sequence number

Channel coefficient (real part)

Subcarrier sequence number

Channel coefficient (imaginary part)

Subcarrier sequence number

FIG. 7c

EP 4 580 080 A1

**Laboratory empty room environment**

FIG. 8a

FIG. 8b

901

Processing unit

902

Transceiver unit

Communication apparatus

FIG. 9

100

1010

Transceiver

1020

Processor

1040

1030

Memory

FIG. 10

FIG. 11

## INTERNATIONAL SEARCH REPORT

| | International application No. |
| --- | --- |
| | **PCT/CN2023/117738** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

IPC:H04B H04L

Documentation searched other than minimum documentation to the extent that such documents are included in the fields searched

Electronic data base consulted during the international search (name of data base and, where practicable, search terms used)

CNKI, CNTXT, DWPI, ENTXT, ENTXTC: 信道状态信息, 反馈, 压缩, 减少, 降低, 开销, 数据量, 复矩阵, 复数矩阵, 复数, 模, 为1, 等于1, 单位向量, CSI, feedback, compression, reduct, overhead, data volume, complex matrix, mod, equal to 1, unit vector

**C. DOCUMENTS CONSIDERED TO BE RELEVANT**

| Category* | Citation of document, with indication, where appropriate, of the relevant passages | Relevant to claim No. |
| --- | --- | --- |
| A | CN 114079493 A (HUAWEI TECHNOLOGIES CO., LTD.) 22 February 2022 (2022-02-22) description, paragraphs 0417, 0467, 0639, 0670-0679, and 1218-1226 | 1-19 |
| A | CN 106788875 A (CHINA ACADEMY OF TELECOMMUNICATIONS TECHNOLOGY) 31 May 2017 (2017-05-31) entire document | 1-19 |
| A | US 2022077911 A1 (APPLE INC.) 10 March 2022 (2022-03-10) entire document | 1-19 |
| A | US 2022149904 A1 (TELEFONAKTIEBOLAGET LM ERICSSON (PUBL)) 12 May 2022 (2022-05-12) entire document | 1-19 |
| A | WO 2020069459 A1 (NOKIA TECHNOLOGIES OY et al.) 02 April 2020 (2020-04-02) entire document | 1-19 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **14 November 2023** | **21 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/117738**

| Patent document cited in search report | | | Publication date (day/month/year) | Patent family member(s) | | | Publication date (day/month/year) |
|---|---|---|---|---|---|---|---|
| CN | 114079493 | A | 22 February 2022 | WO | 2022033456 | A1 | 17 February 2022 |
| CN | 106788875 | A | 31 May 2017 | | None | | |
| US | 2022077911 | A1 | 10 March 2022 | WO | 2020150700 | A1 | 23 July 2020 |
| | | | | US | 2023089326 | A1 | 23 March 2023 |
| | | | | CN | 113383501 | A | 10 September 2021 |
| US | 2022149904 | A1 | 12 May 2022 | WO | 2020180221 | A1 | 10 September 2020 |
| | | | | EP | 3935742 | A1 | 12 January 2022 |
| | | | | US | 2022376749 | A1 | 24 November 2022 |
| WO | 2020069459 | A1 | 02 April 2020 | | None | | |

Form PCT/ISA/210 (patent family annex) (July 2022)

## REFERENCES CITED IN THE DESCRIPTION

**Patent documents cited in the description**

- CN 202211104120